# EUROPEAN PATENT SPECIFICATION

(11) **EP 3 110 180 B1**
(45) Date of publication and mention of the grant of the patent: **12.12.2018**
(21) Application number: 16170539.7
(22) Date of filing: 20.05.2016
(51) Int. Cl.: H04W 4/029, H04W 4/40, B60L 3/00, B62K 3/00, G06F 1/16, B60Q 9/00, B60C 9/00, B62K 11/00, H04W 4/02

(54) **METHOD AND DEVICE FOR MANAGING SELF-BALANCED VEHICLE**
VERFAHREN UND VORRICHTUNG ZUR VERWALTUNG EINES SICH SELBST AUSTARIERENDEN FAHRZEUGS
PROCÉDÉ ET DISPOSITIF DE GESTION DE VÉHICULE AUTO-ÉQUILIBRÉ

(30) Priority: 26.06.2015 CN 201510363955
(43) Date of publication of application: 28.12.2016
(73) Proprietor: Xiaomi Inc., Beijing 100085 (CN)
(72) Inventor: XIE, Yan, 100085 BEIJING (CN); REN, Tian, 100085 BEIJING (CN); CHENG, Yue, 100085 BEIJING (CN)
(74) Representative: Perrot, Emilie

(56) References cited:
- WO-A1-2015/006196
- US-A1- 2013 040 610
- US-B1- 9 020 538

## Description

### TECHNICAL FIELD

The present invention generally relates to the field of network communication technology, and more particularly, to a method and a device for managing a self-balanced vehicle.

### BACKGROUND

In the related art, a self-balanced vehicle can detect changes in its posture by a built-in gyroscope and acceleration sensor and can adjust a driving motor accordingly by a servo management system to keep systematic balance.

US 9,020,538 B1, US 2013/040610 A1 and WO 2015/006196 A1 disclose known methods for displaying notifications on a wearable device.

### SUMMARY

The present invention provides a method and a device for managing a self-balanced vehicle as set out in the appended claims.

According to a first aspect, the invention relates to a method for managing a self-balanced vehicle, which is performed by a terminal, the method comprising:
establishing a connection with the self-balanced vehicle through Blue Tooth;
acquiring traveling state data of the self-balanced vehicle through the connection;
determining whether a smart warning mode is enabled;
if the smart warning mode is enabled, establishing a connection with a smart wearable device through Blue Tooth; and
acquiring a preset to-be-monitored item and a preset warning event, monitoring the to-be-monitored item in the traveling state data and determining whether the warning event is satisfied, and if the warning event is satisfied, sending a warning message to the smart wearable device through the Blue Tooth connection.

Optionally, the step of acquiring a preset to-be-monitored item and a warning event, monitoring the to-be-monitored item in the traveling state data and determining whether the warning event is satisfied, and if the warning event is satisfied, sending a warning message to the smart wearable device through the Blue Tooth connection, comprises:
acquiring a preset to-be-monitored item and a preset warning event, sending the to-be-monitored item and the warning event to the self-balanced vehicle, such that the self-balanced vehicle monitors the to-be-monitored item in its traveling state data;
receiving a warning message which is returned by the self-balanced vehicle through the Blue Tooth connection when the self-balanced vehicle monitors that the warning event is satisfied; and
sending the warning message which is returned by the self-balanced vehicle to the smart wearable device through the Blue Tooth connection, such that the smart wearable device performs warning.

Optionally, the step of acquiring a preset to-be-monitored item and a warning event, monitoring the to-be-monitored item in the traveling state data and determining whether the warning event is satisfied, and if the warning event is satisfied, sending a warning message to the smart wearable device through the Blue Tooth connection, comprises:
acquiring a preset to-be-monitored item and a preset warning event, and sending the to-be-monitored item to the self-balanced vehicle;
receiving real-time state data corresponding to the preset to-be-monitored item which is sent by the self-balanced vehicle; and
monitoring the real-time state data and determining whether the warning event is satisfied; and
when the warning event is satisfied, sending a warning message to the smart wearable device through the Blue Tooth connection such that the smart wearable device performs warning.

Optionally, the method further comprises:
receiving an instruction for enabling the smart warning mode and enabling the smart warning mode.

Optionally, the step of enabling the smart warning mode further comprises:
receiving input settings of a to-be-monitored item and a warning event for the smart warning mode; and
setting the to-be-monitored item and the warning event for the smart warning mode according to the input settings.

Optionally, the step of enabling the smart warning mode further comprises:
receiving an input setting of a warning manner corresponding to the warning event; and
setting the warning manner corresponding to the warning event according to the input setting.

Optionally, the step of monitoring the to-be-monitored item in the traveling state data and determining whether the warning event is satisfied comprises:
monitoring a remaining battery power of the self-balanced vehicle and determining whether the remaining battery power is below a power threshold;
monitoring a traveling speed of the self-balanced vehicle and determining whether the traveling speed is higher than a speed threshold;
monitoring a body temperature of the self-balanced vehicle and determining whether the body temperature is higher than a temperature threshold;
monitoring performance and operation condition of the self-balanced vehicle and determining whether a failure occurs;
monitoring a location of the self-balanced vehicle and determining whether the location has changed; and/or
monitoring a locking state of the self-balanced vehicle and determining whether it is in an unlocking state.

Optionally, the method further comprises:
when the smart warning mode is enabled, acquiring weather data and determining whether a preset warning event is satisfied according to the weather data; and
when the warning event is satisfied, sending a warning message to the smart wearable device through the Blue Tooth connection.

Optionally, the method further comprises:
receiving an unlocking request which is sent by the smart wearable device; and
sending an unlocking instruction to the self-balanced vehicle according to the unlocking request, such that the self-balanced vehicle releases a locking state according to the received unlocking instruction.

Optionally, the method further comprises:
receiving a vehicle searching request which is sent by the smart wearable device; and
searching for the self-balanced vehicle through Blue Tooth according to the vehicle searching request and detecting whether Blue Tooth connection with the self-balanced vehicle is established; and
if the Blue Tooth connection with the self-balanced vehicle is established, sending a vehicle found instruction to the self-balanced vehicle such that the self-balanced vehicle performs a vehicle found warning.

Optionally, the step of acquiring traveling state data of the self-balanced vehicle through the connection comprises:
receiving traveling state data of the self-balanced vehicle which is sent by the self-balanced vehicle periodically through the Blue Tooth connection; or
sending a state acquiring instruction periodically to the self-balanced vehicle and receiving traveling state data of the self-balanced vehicle which is returned by the self-balanced vehicle according to the state acquiring instruction.

Optionally, the step of establishing a connection with a smart wearable device through Blue Tooth comprises:
when searching out a plurality of smart wearable devices, receiving a user selection instruction with respect to a smart wearable device, and connecting the smart wearable device selected by the user according to the user selection instruction; or
when searching out a plurality of smart wearable devices, connecting a smart wearable device with the highest priority according to a preset priority order.

Optionally, if the warning event is satisfied, the sending of a warning message to the smart wearable device through the Blue Tooth connection, comprises:
if the warning event is satisfied, sending the warning event and a corresponding preset warning manner to the smart wearable device through the Blue Tooth connection, such that the smart wearable device performs warning according to the preset warning manner.

According to a second aspect, the invention relates to a device for managing a self-balanced vehicle, which is comprised in a terminal, the device comprising:
a first connecting module configured to establish a connection with the self-balanced vehicle through Blue Tooth;
a traveling-state-data acquiring module configured to acquire traveling state data of the self-balanced vehicle through the connection;
a warning-mode determining module configured to determine whether a smart warning mode is enabled;
a second connecting module configured to, if the smart warning mode is enabled, establish a connection with a smart wearable device through Blue Tooth; and
a warning module configured to acquire a preset to-be-monitored item and a preset warning event, monitor the to-be-monitored item in the traveling state data and determine whether the warning event is satisfied, and if the warning event is satisfied, send a warning message to the smart wearable device through the Blue Tooth connection.

Optionally, the warning module comprises:
a first acquiring sub-module configured to acquire a preset to-be-monitored item and a preset warning event, send the to-be-monitored item and the warning event to the self-balanced vehicle, such that the self-balanced vehicle monitors the to-be-monitored item in its traveling state data;
a first receiving sub-module configured to receive a warning message which is returned by the self-balanced vehicle through the Blue Tooth connection when the self-balanced vehicle monitors that the warning event is satisfied; and
a first sending sub-module configured to send the warning message which is returned by the self-balanced vehicle to the smart wearable device through the Blue Tooth connection, such that the smart wearable device performs warning.

Optionally, the warning module comprises:
a second acquiring sub-module configured to acquire a preset to-be-monitored item and a preset warning event, and send the to-be-monitored item to the self-balanced vehicle;
a second receiving sub-module configured to receive real-time state data corresponding to the preset to-be-monitored item which is sent by the self-balanced vehicle; and
a monitoring sub-module configured to monitor the real-time state data and determine whether the warning event is satisfied; and
a second sending sub-module configured to, when the warning event is satisfied, send a warning message to the smart wearable device through the Blue Tooth connection such that the smart wearable device performs warning.

Optionally, the device further comprises:
a warning-mode enabling module configured to receive an instruction for enabling the smart warning mode and enable the smart warning mode.

Optionally, the device further comprises:
a first setting input module configured to receive input settings of a to-be-monitored item and a warning event for the smart warning mode; and
a first warning setting module configured to set the to-be-monitored item and the warning event for the smart warning mode according to the input settings.

Optionally, the device further comprises:
a second setting input module configured to receive an input setting of a warning manner corresponding to the warning event; and
a second warning setting module configured to set the warning manner corresponding to the warning event according to the input setting.

Optionally, the warning module comprises at least one of:
a first determining sub-module configured to acquire a preset to-be-monitored item and a preset warning event, monitor a remaining battery power of the self-balanced vehicle, determine whether the remaining battery power is below a power threshold, and if the remaining battery power is below the power threshold, send a warning message to the smart wearable device through the Blue Tooth connection, the preset to-be-monitored item comprising the remaining battery power of the self-balanced vehicle, the preset warning event comprising below the power threshold;
a second determining sub-module configured to acquire a preset to-be-monitored item and a preset warning event, monitor a traveling speed of the self-balanced vehicle, determine whether the traveling speed is higher than a speed threshold, and if the traveling speed is higher than the speed threshold, send a warning message to the smart wearable device through the Blue Tooth connection, the preset to-be-monitored item comprising the traveling speed of the self-balanced vehicle, the preset warning event comprising higher than the speed threshold;
a third determining sub-module configured to acquire a preset to-be-monitored item and a preset warning event, monitor a body temperature of the self-balanced vehicle, determine whether the body temperature is higher than a temperature threshold, and if the body temperature is higher than the temperature threshold, send a warning message to the smart wearable device through the Blue Tooth connection, the preset to-be-monitored item comprising the body temperature of the self-balanced vehicle, the preset warning event comprising higher than the temperature threshold;
a fourth determining sub-module configured to acquire a preset to-be-monitored item and a preset warning event, monitor performance and operation condition of the self-balanced vehicle, determine whether a failure occurs, and if a failure occurs, send a warning message to the smart wearable device through the Blue Tooth connection, the preset to-be-monitored item comprising the performance and operation condition of the self-balanced vehicle, the preset warning event comprising occurrence of a failure;
a fifth determining sub-module configured to acquire a preset to-be-monitored item and a preset warning event, monitor a location of the self-balanced vehicle, determine whether the location has changed, and if the location has changed, send a warning message to the smart wearable device through the Blue Tooth connection, the preset to-be-monitored item comprising the location of the self-balanced vehicle, the preset warning event comprising the location having changed; and
a sixth determining sub-module configured to acquire a preset to-be-monitored item and a preset warning event, monitor a locking state of the self-balanced vehicle, determine whether it is in an unlocking state, and if it is in an unlocking state, send a warning message to the smart wearable device through the Blue Tooth connection, the preset to-be-monitored item comprising the locking state of the self-balanced vehicle, the preset warning event comprising the self-balanced vehicle in the unlocking state.

Optionally, the device further comprises:
a weather-data determining module configured to, when the smart warning mode is enabled, acquire weather data and determine whether a preset warning event is satisfied according to the weather data; and
a weather-data warning module configured to, when the warning event is satisfied, send a warning message to the smart wearable device through the Blue Tooth connection.

Optionally, the device further comprises:
an unlocking-request receiving module configured to receive an unlocking request which is sent by the smart wearable device; and
an unlocking-instruction sending module configured to send an unlocking instruction to the self-balanced vehicle according to the unlocking request, such that the self-balanced vehicle releases a locking state according to the received unlocking instruction.

Optionally, the device further comprises:
a vehicle-searching-request receiving module configured to receive a vehicle searching request which is sent by the smart wearable device; and
a Blue-Tooth verifying module configured to search for the self-balanced vehicle through Blue Tooth according to the vehicle searching request and detect whether Blue Tooth connection with the self-balanced vehicle is established; and
a vehicle-found-instruction sending module configured to, if the Blue Tooth connection with the self-balanced vehicle is established, send a vehicle found instruction to the self-balanced vehicle such that the self-balanced vehicle performs a vehicle found warning.

Optionally, the traveling-state-data acquiring module comprises: a first acquiring sub-module or a second acquiring sub-module;
the first acquiring sub-module is configured to receive traveling state data of the self-balanced vehicle which is sent by the self-balanced vehicle periodically through the Blue Tooth connection; or
the second acquiring sub-module is configured to send a state acquiring instruction periodically to the self-balanced vehicle and receive traveling state data of the self-balanced vehicle which is returned by the self-balanced vehicle according to the state acquiring instruction.

Optionally, the second connecting module comprises: a first connecting sub-module or a second connecting sub-module;
the first connecting sub-module is configured to, when a plurality of smart wearable devices is searched out, receive a user selection instruction with respect to a smart wearable device, and connect the smart wearable device selected by the user according to the user selection instruction; or
the second connecting sub-module is configured to, when a plurality of smart wearable devices is searched out, connect a smart wearable device with the highest priority according to a preset priority order.

Optionally, the warning module comprises:
a warning sub-module configured to, if the warning event is satisfied, send the warning event and a corresponding preset warning manner to the smart wearable device through the Blue Tooth connection, such that the smart wearable device performs warning according to the preset warning manner.

According to a third aspect, the invention relates to a device for managing a self-balanced vehicle, wherein the device comprises:
a processor; and
a memory for storing instructions executable by the processor;
wherein the processor is configured to perform:
establishing a connection with the self-balanced vehicle through Blue Tooth;
acquiring traveling state data of the self-balanced vehicle through the connection;
determining whether a smart warning mode is enabled;
if the smart warning mode is enabled, establishing a connection with a smart wearable device through Blue Tooth; and
acquiring a preset to-be-monitored item and a preset warning event, monitoring the to-be-monitored item in the traveling state data and determining whether the warning event is satisfied, and if the warning event is satisfied, sending a warning message to the smart wearable device through the Blue Tooth connection.

In one embodiment, the steps of the method for managing a self-balanced vehicle are determined by computer program instructions.

Consequently, according to a fourth aspect, the invention is also directed to a computer program for executing the steps of a method for managing a self-balanced vehicle as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical scheme according to embodiments of the present invention may have the following beneficial effects.

In the present invention, the user terminal supports a smart warning mode; establishes a connection with the self-balanced vehicle through Blue Tooth; acquires traveling state data of the self-balanced vehicle through the Blue Tooth connection; determines whether the smart warning mode is enabled; if the smart warning mode is enabled, establishes a connection with a smart wearable device through Blue Tooth; acquires a preset to-be-monitored item and a preset warning event; monitors the to-be-monitored item in the traveling state data and determines whether the warning event is satisfied; and if the warning event is satisfied, sends a warning message to the smart wearable device through the Blue Tooth connection. Thereby, the user terminal can warn the user through the smart wearable device such that the user can timely learn about the warning message through the smart wearable device. Thus, it not only can improve the safety in operation of the self-balanced vehicle, but also can improve the user experience.

In the present invention, the user terminal takes charge of sending the preset to-be-monitored item and the preset warning event to the self-balanced vehicle, and the self-balanced vehicle takes charge of monitoring its traveling state data. When the self-balanced vehicle monitors that the warning event is satisfied, the self-balanced vehicle will return a warning message to the user terminal. The user terminal sends the warning message which is returned by the self-balanced vehicle to the smart wearable device through the Blue Tooth connection, such that the smart wearable device performs warning. Thereby, the user can timely learn about the warning message returned by the self-balanced vehicle through the smart wearable device. Thus, it not only can improve the safety in operation of the self-balanced vehicle, but also can improve the user experience.

In the present invention, after the user terminal acquires the preset to-be-monitored item and the preset warning event, the user terminal only sends the preset to-be-monitored item to the self-balanced vehicle. Then the self-balanced vehicle only takes care of the real-time state data corresponding to the preset to-be-monitored item and sends the real-time state data corresponding to the preset to-be-monitored item to the user terminal at preset timings or periodically. The user terminal takes charge of monitoring the real-time state data corresponding to the preset to-be-monitored item and when the user terminal monitors that any abnormality occurs, the user terminal will warn the user through the smart wearable device. Thereby, the user can timely learn about the warning message returned by the self-balanced vehicle through the smart wearable device. Thus, it not only can improve the safety in operation of the self-balanced vehicle, but also can improve the user experience.

In the present invention, the user terminal supports inputting settings of the to-be-monitored item and the warning event, and can set the to-be-monitored item and the warning event for the smart warning mode according to the input settings. Thereby, the user terminal can set the to-be-monitored item and the warning event according to the need of the user, thus improving the user experience.

In the present invention, the user terminal supports input settings of the warning manner and can set the warning manner corresponding to the warning event according to the input setting. Thereby, the user terminal can set a preset warning manner according to the need of the user, thus improving the user experience.

In the present invention, the user terminal can support a plurality of to-be-monitored items and corresponding warning events, and can provide various warning messages to the user. Thereby, it can bring convenience for the user to operate the self-balanced vehicle, and it can also improve the safety in operation of the self-balanced vehicle and improve the user experience.

In the present invention, the user terminal can support weather warning. When the smart warning mode is enabled, the user terminal can acquire weather data, determine whether a preset warning event is satisfied according to the weather data, and when the warning event is satisfied, a warning message is sent to the smart wearable device through the Blue Tooth connection. Thereby, the user can timely learn about the weather warning when he uses the self-balanced vehicle. Thus, it can ensure the safety traveling of the self-balanced vehicle, bring convenience for the user to operate the self-balanced vehicle, and improve the user experience.

In the present invention, the user terminal can send an unlocking instruction to the self-balanced vehicle according to the unlocking request of the smart wearable device, such that the self-balanced vehicle releases a locking state based on the unlocking request of the smart wearable device. Thereby, it can indirectly achieve data communication between the smart wearable device and the self-balanced vehicle. Thus, it can bring convenience for the user and improve the user experience.

In the present invention, based on a vehicle searching request of the smart wearable device, the user terminal can send a vehicle found instruction to a self-balanced vehicle of which the Blue Tooth connection has been established, such that the self-balanced vehicle can perform vehicle found warning under the vehicle searching request of the smart wearable device. It can indirectly achieve data communication between the smart wearable device and the self-balanced vehicle. Thus, it can bring convenience for the user and improve the user experience.

In the present invention, when managing the self-balanced vehicle, the user terminal requires for traveling state data of the self-balanced vehicle. It can acquire the traveling state data of the self-balanced vehicle by either passively receiving data or by actively acquiring data. Thus, it can improve the efficiency of the user terminal acquiring traveling state data of the self-balanced vehicle.

In the present invention, determining a smart wearable device to be connected with the user terminal can be implemented by either user selection or determining based on a priority order. Thereby, it can ensure that the smart wearable device can accomplish the warning function and it can improve the efficiency of managing the self-balanced vehicle.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for managing a self-balanced vehicle according to an exemplary embodiment of the present invention;
Fig. 2 is a flow chart illustrating a step of acquiring a preset to-be-monitored item and a preset warning event of a method for managing a self-balanced vehicle according to an exemplary embodiment of the present invention;
Fig. 3 is a flow chart illustrating a step of acquiring a preset to-be-monitored item and a preset warning event of a method for managing a self-balanced vehicle according to an exemplary embodiment of the present invention;
Fig. 4 is a flow chart illustrating another method for managing a self-balanced vehicle according to an exemplary embodiment of the present invention;
Fig. 5 is a flow chart illustrating another method for managing a self-balanced vehicle according to an exemplary embodiment of the present invention;
Fig. 6 is a flow chart illustrating a step of acquiring a preset to-be-monitored item and a preset warning event of a method for managing a self-balanced vehicle according to an exemplary embodiment of the present invention;
Fig. 7 is a flow chart illustrating another method for managing a self-balanced vehicle according to an exemplary embodiment of the present invention;
Fig. 8 is a flow chart illustrating another method for managing a self-balanced vehicle according to an exemplary embodiment of the present invention;
Fig. 9 is a flow chart illustrating another method for managing a self-balanced vehicle according to an exemplary embodiment of the present invention;
Fig. 10 is a flow chart illustrating a step of acquiring traveling state data of a method for managing a self-balanced vehicle according to an exemplary embodiment of the present invention;
Fig. 11 is a flow chart illustrating a step of establishing a connection with a smart wearable device of a method for managing a self-balanced vehicle according to an exemplary embodiment of the present invention;
Fig. 12 is a diagram illustrating an application scenario of a method for managing a self-balanced vehicle according to an exemplary embodiment of the present invention;
Fig. 13 is a block diagram of a device for managing a self-balanced vehicle according to an exemplary embodiment of the present invention;
Fig. 14 is a block diagram of another device for managing a self-balanced vehicle according to an exemplary embodiment of the present invention;
Fig. 15 is a block diagram of another device for managing a self-balanced vehicle according to an exemplary embodiment of the present invention;
Fig. 16 is a block diagram of another device for managing a self-balanced vehicle according to an exemplary embodiment of the present invention;
Fig. 17 is a block diagram of another device for managing a self-balanced vehicle according to an exemplary embodiment of the present invention;
Fig. 18 is a block diagram of another device for managing a self-balanced vehicle according to an exemplary embodiment of the present invention;
Fig. 19 is a block diagram of another device for managing a self-balanced vehicle according to an exemplary embodiment of the present invention;
Fig. 20 is a block diagram of another device for managing a self-balanced vehicle according to an exemplary embodiment of the present invention;
Fig. 21 is a block diagram of another device for managing a self-balanced vehicle according to an exemplary embodiment of the present invention;
Fig. 22 is a block diagram of another device for managing a self-balanced vehicle according to an exemplary embodiment of the present invention;
Fig. 23 is a block diagram of another device for managing a self-balanced vehicle according to an exemplary embodiment of the present invention;
Fig. 24 is a block diagram of another device for managing a self-balanced vehicle according to an exemplary embodiment of the present invention; and
Fig. 25 is a block diagram of a device for managing a self-balanced vehicle according to an exemplary embodiment of the present invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terms used herein are merely for describing a particular embodiment, rather than limiting the present invention. As used in the present invention and the appended claims, terms in singular forms such as "a" "said" and "the" are intended to also include plural forms, unless explicitly dictated otherwise. It should also be understood that the term "and / or" used herein means any one or any possible combination of one or more associated listed items.

It should be understood that, although it may describe an element with a term first, second, or third, etc., the element is not limited by these terms. These terms are merely for distinguishing among elements of the same kind. For example, without departing from the scope of the present invention, a first element can also be referred to as a second element. Similarly, a second element can also be referred to as a first element. Depending on the context, a term "if" as used herein can be interpreted as "when", "where" or "in response to".

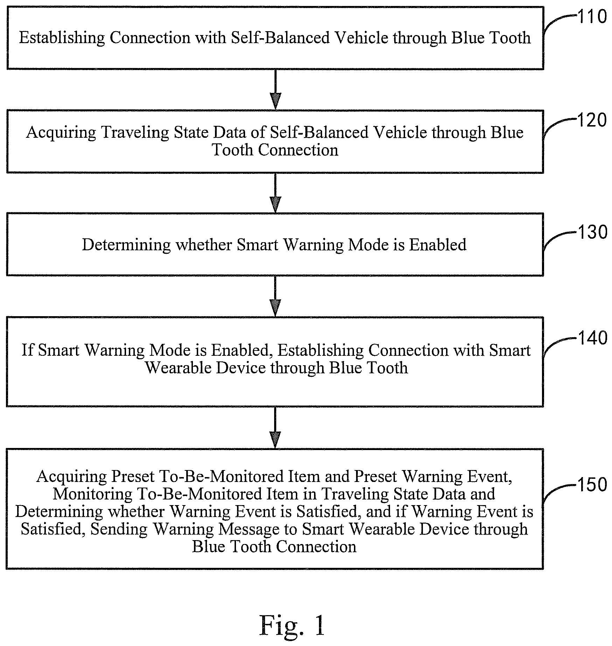

Fig. 1 is a flow chart of a method for managing a self-balanced vehicle according to an exemplary embodiment of the present invention, which can be performed by a user terminal. The method includes the following steps.

In step 110, a connection with the self-balanced vehicle is established through Blue Tooth.

In an embodiment of the present invention, after the user terminal establishes a connection with the self-balanced vehicle through Blue Tooth, the user terminal can exchange data with the self-balanced vehicle in a short range through Blue Tooth. The self-balanced vehicle can be a self-balanced vehicle which is selected by the user and which accepts management by the user.

In step 120, traveling state data of the self-balanced vehicle is acquired through the Blue Tooth connection.

In an embodiment of the present invention, traveling state data of the self-balanced vehicle can include at least one of a current remaining battery power, a current locking state or a current unlocking state, a current light color, a current traveling direction, a current traveling speed, a current body temperature and a current location.

In addition, the traveling state data of the self-balanced vehicle can also include performance and operation condition of the self-balanced vehicle and a location of the self-balanced vehicle.

In step 130, it is determined whether a smart warning mode is enabled.

In an embodiment of the present invention, the user terminal can have a smart warning mode. The smart warning mode refers to a mode in which when the user terminal monitors that any abnormality in the traveling state data of the self-balanced vehicle occurs, the user terminal can warn the user through the smart wearable device, such that the user can timely lean about the abnormality of the self-balanced vehicle.

In addition, the user terminal has a management interface which is a platform provided by the user terminal for the user to manage the self-balanced vehicle. The user can click a preset button in the management interface to enable the smart warning mode, or can click a button of the user terminal to enable the smart warning mode.

In step 140, if the smart warning mode is enabled, a connection with a smart wearable device is established through Blue Tooth.

In an embodiment of the present invention, after the smart warning mode is enabled, when the user terminal monitors that any abnormality in the traveling state data of the self-balanced vehicle occurs, the user terminal will control the smart wearable device to warn the user. Therefore, the user terminal will establish a connection with a smart wearable device through Blue Tooth in advance.

Moreover, after the user terminal establishes a connection with a smart wearable device through Blue Tooth, the user terminal can exchange data with the smart wearable device in a short range through Blue Tooth. The smart wearable device connected with the user terminal can be a device which is selected by the user and which accepts instructions of the user; or can be a device selected according to other criteria, such as priorities of devices.

In addition, the smart wearable device in an embodiment of the present invention can be any smart wearable device carried by the user with himself, such as a smart bracelet, a smart watch, a smart ring, a smart necklace, smart glasses, a smart earpiece, etc.

In step 150, a preset to-be-monitored item and a preset warning event are acquired, the to-be-monitored item in the traveling state data is monitored and it is determined whether the warning event is satisfied, and if the warning event is satisfied, a warning message is sent to the smart wearable device through the Blue Tooth connection.

In an embodiment of the present invention, the preset to-be-monitored item and the preset warning event can be set automatically by the user terminal according to practical application, or can be set by the user, or can be designated by a server.

The preset to-be-monitored item can be one or more travelling states of the self-balanced vehicle. For example, the preset to-be-monitored item can include a traveling speed, a body temperature and a remaining battery power, etc.

The preset warning event can be an abnormal state of the self-balanced vehicle which should be warned to the user. For example, when a traveling speed of the self-balanced vehicle is higher than a speed threshold, it means the self-balanced vehicle has a high traveling speed which should be warned to the user.

It can be seen from the above embodiment that, the user terminal supports a smart warning mode; establishes a connection with the self-balanced vehicle through Blue Tooth; acquires traveling state data of the self-balanced vehicle through the Blue Tooth connection; determines whether the smart warning mode is enabled; if the smart warning mode is enabled, establishes a connection with a smart wearable device through Blue Tooth; acquires a preset to-be-monitored item and a preset warning event; monitors the to-be-monitored item in the traveling state data and determines whether the warning event is satisfied; and if the warning event is satisfied, sends a warning message to the smart wearable device through the Blue Tooth connection. Thereby, the user terminal can warn the user through the smart wearable device such that the user can timely learn about the warning message through the smart wearable device. Thus, it not only can improve the safety in operation of the self-balanced vehicle, but also can improve the user experience.

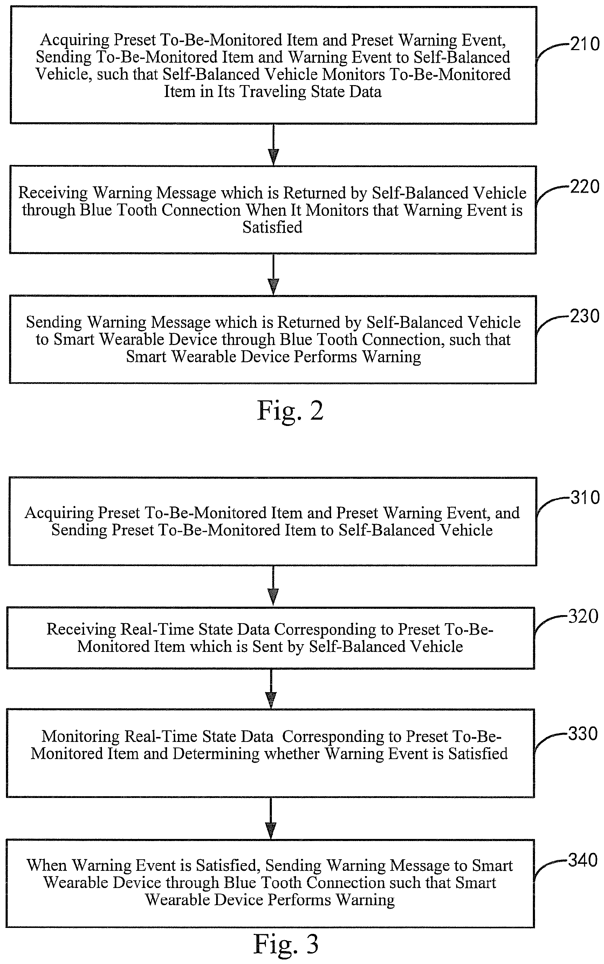

In an embodiment, step 150 of the method for managing a self-balanced vehicle may be performed by a user terminal in several steps shown in Fig. 2. The step 150 of acquiring a preset to-be-monitored item and a preset warning event, monitoring the to-be-monitored item in the traveling state data and determining whether the warning event is satisfied, and if the warning event is satisfied, sending a warning message to the smart wearable device through the Blue Tooth connection, can include the following steps.

In step 210, a preset to-be-monitored item and a preset warning event are acquired, the to-be-monitored item and the warning event are sent to the self-balanced vehicle, such that the self-balanced vehicle monitors the to-be-monitored item in its traveling state data.

In an embodiment of the present invention, the preset to-be-monitored item and the preset warning event can be set automatically by the user terminal according to practical application, or can be set by the user, or can be designated by a server.

After the user terminal sends the to-be-monitored item and the warning event to the self-balanced vehicle, the self-balanced vehicle takes charge of monitoring its traveling state data. When the self-balanced vehicle monitors that any abnormality in its performance occurs, the self-balanced vehicle will initiatively send a warning message to the user terminal, so as to cause the user terminal to inform the user of the abnormality.

In step 220, a warning message is received, which is returned by the self-balanced vehicle through the Blue Tooth connection when the self-balanced vehicle monitors that the warning event is satisfied.

In an embodiment of the present invention, under the smart warning mode, after user terminal receives a warning message which is returned by the self-balanced vehicle, the user terminal will warn the user through the smart wearable device.

In step 230, the warning message, which is returned by the self-balanced vehicle, is sent to the smart wearable device through the Blue Tooth connection, such that the smart wearable device performs warning.

In an embodiment of the present invention, after the user terminal sends the warning message to the smart wearable device, the smart wearable device will warn the user according to the warning message. Thereby, the user can timely learn about that abnormality occurs in the self-balanced vehicle.

It can be seen from the above embodiment that, the user terminal takes charge of sending the preset to-be-monitored item and the preset warning event to the self-balanced vehicle, and the self-balanced vehicle takes charge of monitoring its traveling state data. When the self-balanced vehicle monitors that the warning event is satisfied, the self-balanced vehicle will return a warning message to the user terminal. The user terminal sends the warning message which is returned by the self-balanced vehicle to the smart wearable device through the Blue Tooth connection, such that the smart wearable device performs warning. Thereby, the user can timely learn about the warning message returned by the self-balanced vehicle through the smart wearable device. Thus, it not only can improve the safety in operation of the self-balanced vehicle, but also can improve the user experience.

In an embodiment, step 150 of the method for managing a self-balanced vehicle may be performed by a user terminal in several steps shown in Fig. 3. The step 150 of acquiring a preset to-be-monitored item and a preset warning event, monitoring the to-be-monitored item in the traveling state data and determining whether the warning event is satisfied, and if the warning event is satisfied, sending a warning message to the smart wearable device through the Blue Tooth connection, can include the following steps.

In step 310, a preset to-be-monitored item and a preset warning event are acquired, and the preset to-be-monitored item is sent to the self-balanced vehicle.

In an embodiment of the present invention, after the user terminal acquires the preset to-be-monitored item and the preset warning event, the user terminal only sends the preset to-be-monitored item to the self-balanced vehicle. Then the self-balanced vehicle only takes care of the real-time state data corresponding to the preset to-be-monitored item and sends the real-time state data corresponding to the preset to-be-monitored item to the user terminal at preset timings or periodically. The user terminal takes charge of monitoring the real-time state data corresponding to the preset to-be-monitored item and when the user terminal monitors that any abnormality occurs, the user terminal will warn the user through the smart wearable device. Thereby, the user can timely learn about the abnormality.

In step 320, real-time state data corresponding to the preset to-be-monitored item which is sent by the self-balanced vehicle is received.

In an embodiment of the present invention, the preset to-be-monitored item can be one or more travelling states of the self-balanced vehicle. For example, the preset to-be-monitored item can be a traveling speed, a real-time state data which is received for a first time can be 5 km/h, and a real-time state data which is received for a second time can be 12 km/h.

In step 330, the real-time state data corresponding to the preset to-be-monitored item is monitored and it is determined whether the warning event is satisfied.

In an embodiment of the present invention, the user terminal takes charge of determining whether abnormality of the self-balanced vehicle occurs. For example, a warning event corresponding to the traveling speed can be performing warning if the traveling speed is higher than 5 km/h, and if the real-time state data received by the user terminal is 12 km/h, it means that the traveling speed meets the warning event, and the user should be warned.

In step 340, when the warning event is satisfied, a warning message is sent to the smart wearable device through the Blue Tooth connection such that the smart wearable device performs warning.

In an embodiment of the present invention, after the user terminal sends the warning message to the smart wearable device, the smart wearable device can warn the user according to the warning message. Thereby, the user can timely learn about that abnormality occurs in the self-balanced vehicle.

It can be seen from the above embodiment that, after the user terminal acquires the preset to-be-monitored item and the preset warning event, the user terminal only sends the preset to-be-monitored item to the self-balanced vehicle. Then the self-balanced vehicle only takes care of the real-time state data corresponding to the preset to-be-monitored item and sends the real-time state data corresponding to the preset to-be-monitored item to the user terminal at preset timings or periodically. The user terminal takes charge of monitoring the real-time state data corresponding to the preset to-be-monitored item and when the user terminal monitors that any abnormality occurs, the user terminal will warn the user through the smart wearable device. Thereby, the user can timely learn about the warning message returned by the self-balanced vehicle through the smart wearable device. Thus, it not only can improve the safety in operation of the self-balanced vehicle, but also can improve the user experience.

In an embodiment, the method for managing a self-balanced vehicle according to the present invention also includes:
receiving an instruction for enabling the smart warning mode and enabling the smart warning mode.

In an embodiment of the present invention, the user terminal can enable the smart warning mode according to an enabling instruction of the user.

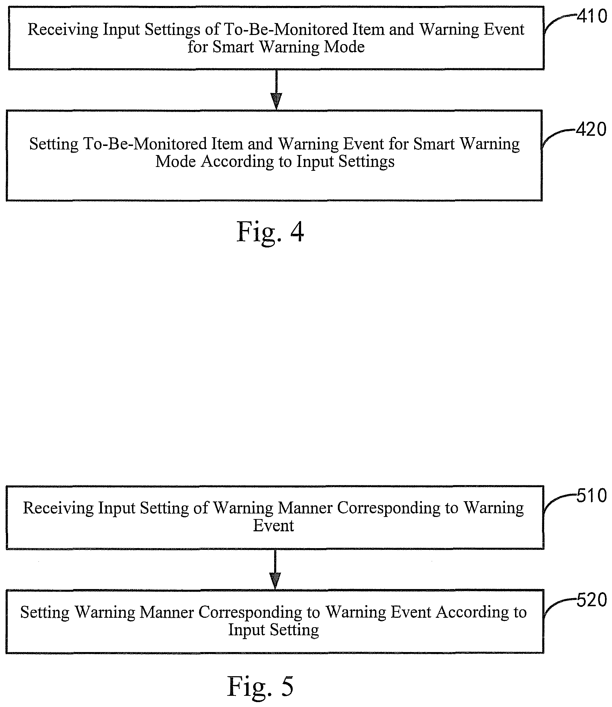

Fig. 4 is a flow chart of another method for managing a self-balanced vehicle according to an exemplary embodiment of the present invention, which can be performed by a user terminal. After the user terminal enables the smart warning mode, the method can also include the following steps.

In step 410, input settings of a to-be-monitored item and a warning event for the smart warning mode are received.

In an embodiment of the present invention, the management interface can provide various manners for inputting settings of a to-be-monitored item and a warning event. The manners for inputting settings can be user selection, meaning that the user selects among to-be-monitored items and warning events provided in the management interface. Or the manners for inputting settings can be user designation, meaning that the user informs the user terminal of designated to-be-monitored item and warning event.

In step 420, the to-be-monitored item and the warning event for the smart warning mode are set according to the input settings.

In an embodiment of the present invention, the user terminal can set the to-be-monitored item and the warning event for the smart warning mode according to the input settings of the user.

It can be seen from the above embodiment that, the user terminal supports inputting settings of the to-be-monitored item and the warning event, and can set the to-be-monitored item and the warning event for the smart warning mode according to the input settings. Thereby, the user terminal can set the to-be-monitored item and the warning event according to the need of the user, thus improving the user experience.

Fig. 5 is a flow chart of another method for managing a self-balanced vehicle according to an exemplary embodiment of the present invention, which can be performed by a user terminal. After the user terminal enables the smart warning mode, the method can also include the following steps.

In step 510, an input setting of a warning manner corresponding to the warning event is received.

In an embodiment of the present invention, the warning manner can be a sound warning, a light warning or a vibration warning, etc. Each warning event can have a corresponding warning manner. For example, the traveling speed of the self-balanced vehicle being higher than a speed threshold can have a sound warning as the warning manner. In addition, the warning manner corresponding to each warning event can be designated by the user, or can be automatically set by the user terminal based on the user habit.

In step 520, the warning manner corresponding to the warning event is set according to the input setting.

It can be seen from the above embodiment that, the user terminal supports input settings of the warning manner and can set the warning manner corresponding to the warning event according to the input setting. Thereby, the user terminal can set a preset warning manner according to the need of the user, thus improving the user experience.

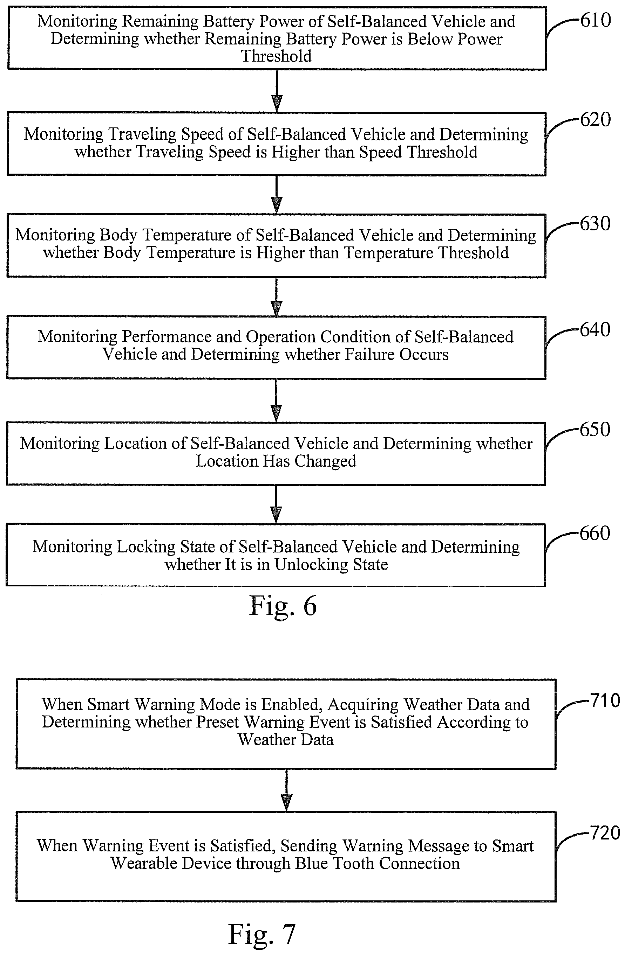

In an embodiment, step 150 of the method for managing a self-balanced vehicle may be performed by a user terminal in several steps shown in Fig. 6. Monitoring the to-be-monitored item in the traveling state data and determining whether the warning event is satisfied in the step 150 can include the following steps.

In step 610, a remaining battery power of the self-balanced vehicle is monitored and it is determined whether the remaining battery power is below a power threshold.

In an embodiment of the present invention, the remaining battery power is a to-be-monitored item and the remaining battery power being below a power threshold is a corresponding warning event.

In step 620, a traveling speed of the self-balanced vehicle is monitored and it is determined whether the traveling speed is higher than a speed threshold.

In an embodiment of the present invention, the traveling speed is a to-be-monitored item and the traveling speed being higher than a speed threshold is a corresponding warning event.

In step 630, a body temperature of the self-balanced vehicle is monitored and it is determined whether the body temperature is higher than a temperature threshold.

In an embodiment of the present invention, the body temperature is a to-be-monitored item and the body temperature being higher than a temperature threshold is a corresponding warning event.

In step 640, performance and operation condition of the self-balanced vehicle is monitored and it is determined whether a failure occurs.

In an embodiment of the present invention, the performance and operation condition is a to-be-monitored item and a failure occurring in the performance and operation condition is a corresponding warning event.

In step 650, a location of the self-balanced vehicle is monitored and it is determined whether the location has changed.

In an embodiment of the present invention, the location of the self-balanced vehicle is a to-be-monitored item and the location of the self-balanced vehicle having changed is a corresponding warning event.

In step 660, a locking state of the self-balanced vehicle is monitored and it is determined whether it is in an unlocking state.

In an embodiment of the present invention, the locking state of the self-balanced vehicle is a to-be-monitored item and it being in an unlocking state is a corresponding warning event.

It can be seen from the above embodiment that, the user terminal can support a plurality of to-be-monitored items and corresponding warning events, and can provide various warning messages to the user. Thereby, it can bring convenience for the user to operate the self-balanced vehicle, and it can also improve the safety in operation of the self-balanced vehicle and improve the user experience.

Fig. 7 is a flow chart of another method for managing a self-balanced vehicle according to an exemplary embodiment of the present invention, which can be performed by a user terminal. The method can also include the following steps.

In step 710, when the smart warning mode is enabled, weather data is acquired and it is determined whether a preset warning event is satisfied according to the weather data.

In an embodiment of the present invention, weather data is a to-be-monitored item and it being a bad weather is a corresponding warning event. Bad weather can refer to a raining day, a windy day, etc.

In step 720, when the warning event is satisfied, a warning message is sent to the smart wearable device through the Blue Tooth connection.

For example, if the weather data indicates a raining day, it satisfies a corresponding warning event and the user terminal can warn the user through the smart wearable device. Thereby, the user can timely learn about the raining day and can make preparation for the safety traveling.

It can be seen from the above embodiment that, the user terminal can support weather warning. When the smart warning mode is enabled, it can acquire weather data, determine whether a preset warning event is satisfied according to the weather data, and when the warning event is satisfied, a warning message is sent to the smart wearable device through the Blue Tooth connection. Thereby, the user can timely learn about the weather warning when he uses the self-balanced vehicle. Thus, it can ensure the safety traveling of the self-balanced vehicle, bring convenience for the user to operate the self-balanced vehicle, and improve the user experience.

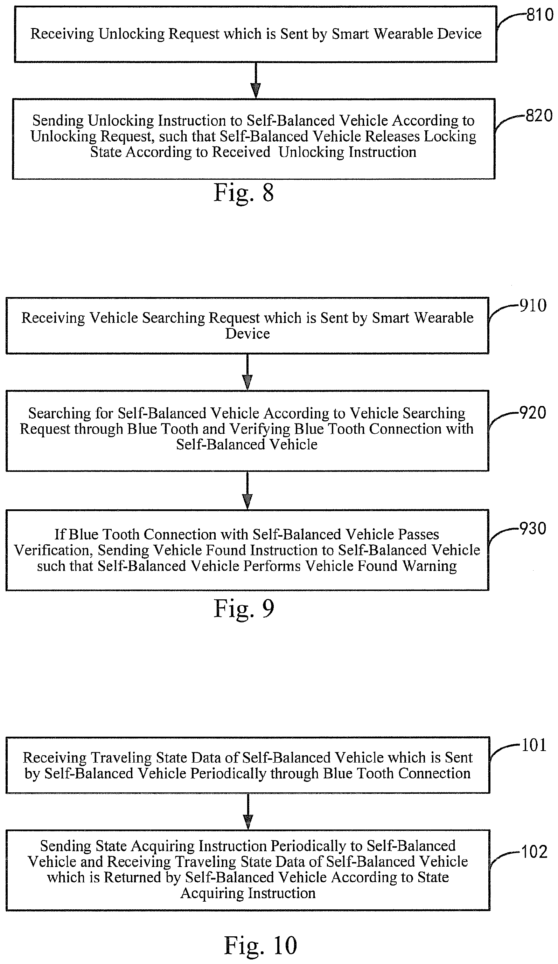

Fig. 8 is a flow chart of another method for managing a self-balanced vehicle according to an exemplary embodiment of the present invention, which can be performed by a user terminal. The method can also include the following steps.

In step 810, an unlocking request which is sent by the smart wearable device is received.

In step 820, an unlocking instruction is sent to the self-balanced vehicle according to the unlocking request, such that the self-balanced vehicle releases a locking state according to the received unlocking instruction.

It can be seen from the above embodiment that, the user terminal can send an unlocking instruction to the self-balanced vehicle according to the unlocking request of the smart wearable device, such that the self-balanced vehicle releases a locking state based on the unlocking request of the smart wearable device. Thereby, it can indirectly achieve data communication between the smart wearable device and the self-balanced vehicle. Thus, it can bring convenience for the user and improve the user experience.

Fig. 9 is a flow chart of another method for managing a self-balanced vehicle according to an exemplary embodiment of the present invention, which can be performed by a user terminal. The method can also include the following steps.

In step 910, a vehicle searching request which is sent by the smart wearable device is received.

In step 920, the self-balanced vehicle is searched for according to the vehicle searching request through Blue Tooth and it is detected whether the Blue Tooth connection with the self-balanced vehicle is established.

In step 930, if the Blue Tooth connection with the self-balanced vehicle is established, a vehicle found instruction is sent to the self-balanced vehicle such that the self-balanced vehicle performs a vehicle found warning.

In an embodiment of the present invention, the vehicle found warning can be a sound warning or a light warning, etc.

It can be seen from the above embodiment that, based on a vehicle searching request of the smart wearable device, the user terminal can send a vehicle found instruction to a self-balanced vehicle of which the Blue Tooth connection has been established, such that the self-balanced vehicle can perform vehicle found warning under the vehicle searching request of the smart wearable device. It can indirectly achieve data communication between the smart wearable device and the self-balanced vehicle. Thus, it can bring convenience for the user and improve the user experience.

In an embodiment, step 120 of the method for managing a self-balanced vehicle may be performed by a user terminal in several steps shown in Fig. 10. Acquiring traveling state data of the self-balanced vehicle through the Blue Tooth connection in the step 120 can also include the following step 101 or step 102.

In step 101, traveling state data of the self-balanced vehicle which is sent by the self-balanced vehicle periodically through the Blue Tooth connection is received.

In step 102, a state acquiring instruction is sent periodically to the self-balanced vehicle and traveling state data of the self-balanced vehicle which is returned by the self-balanced vehicle according to the state acquiring instruction is received.

In either of the above step 101 or 102, traveling state data of the self-balanced vehicle is acquired, and displayed in the management interface, to facilitate the user to manage the self-balanced vehicle according to the data.

It can be seen from the above embodiment that, when managing the self-balanced vehicle, the user terminal requires for traveling state data of the self-balanced vehicle. It can acquire the traveling state data of the self-balanced vehicle by either passively receiving data or by actively acquiring data. Thus, it can improve the efficiency of the user terminal acquiring traveling state data of the self-balanced vehicle.

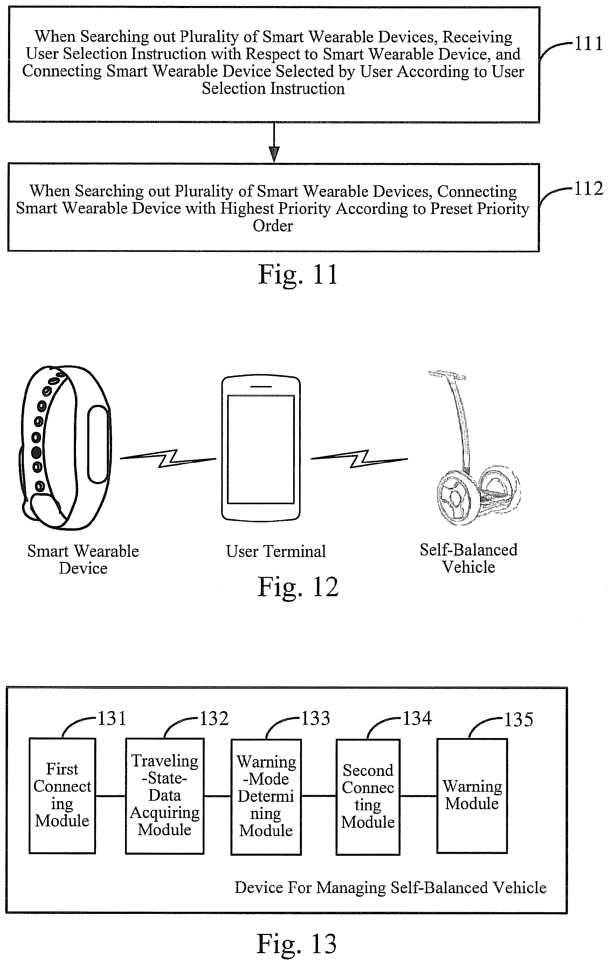

In an embodiment, step 140 of the method for managing a self-balanced vehicle may be performed by a user terminal in several steps shown in Fig. 11. Establishing a connection with a smart wearable device through Blue Tooth in the step 140 can also include the following step 111 or step 112.

In step 111, when a plurality of smart wearable devices is searched out, a user selection instruction with respect to a smart wearable device is received, and the smart wearable device selected by the user is connected according to the user selection instruction.

In step 112, when a plurality of smart wearable devices is searched out, a smart wearable device with the highest priority according to a preset priority order is connected.

It can be seen from the above embodiment that, determining a smart wearable device to be connected with the user terminal can be implemented by either user selection or determining based on a priority order. Thereby, it can ensure that the smart wearable device can accomplish the warning function and it can improve the efficiency of managing the self-balanced vehicle.

In an embodiment, in the step 150, if the warning event is satisfied, sending a warning message to the smart wearable device through the Blue Tooth connection can include:
if the warning event is satisfied, sending the warning event and a corresponding preset warning manner to the smart wearable device through the Blue Tooth connection, such that the smart wearable device performs warning according to the preset warning manner.

For example, the present warning manner can be a sound warning and the smart wearable device can perform a sound warning according to the warning event.

Fig. 12 is a diagram illustrating an application scenario of a method for managing a self-balanced vehicle according to an exemplary embodiment of the present invention. The application scenario involves a smart wearable device, a user terminal and a self-balanced vehicle. There can be one or more self-balanced vehicles, and the user can select one or more self-balanced vehicles from the self-balanced vehicles which are searched out to manage them.

The user terminal establishes a connection with the self-balanced vehicle through Blue Tooth.

The user terminal acquires travelling state data of the self-balanced vehicle through the Blue Tooth connection.

The user terminal determines whether the smart waning mode is enabled.

If the smart waning mode is enabled, the user terminal establishes a connection with the smart wearable device through Blue Tooth. The smart wearable device can be a smart bracelet.

The user terminal acquires a preset to-be-monitored item and a present warning event, monitors the to-be-monitored item in the travelling state data, determines whether the warning event is satisfies, and if the warning event is satisfies, sends a warning event to the smart wearable device through the Blue Tooth connection.

Fig. 13 is a block diagram of a device for managing a self-balanced vehicle according to an exemplary embodiment of the present invention, which is comprised in a user terminal and configured to perform the method for managing a self-balanced vehicle as shown in Fig. 1. The device includes: a first connecting module 131, a traveling-state-data acquiring module 132, a warning-mode determining module 133, a second connecting module 134 and a warning module 135.

The first connecting module 131 is configured to establish a connection with the self-balanced vehicle through Blue Tooth;
the traveling-state-data acquiring module 132 is configured to acquire traveling state data of the self-balanced vehicle through the connection;
the warning-mode determining module 133 is configured to determine whether a smart warning mode is enabled;
the second connecting module 134 is configured to, if the smart warning mode is enabled, establish a connection with a smart wearable device through Blue Tooth; and
the warning module 135 is configured to acquire a preset to-be-monitored item and a preset warning event, monitor the to-be-monitored item in the traveling state data and determine whether the warning event is satisfied, and if the warning event is satisfied, send a warning message to the smart wearable device through the Blue Tooth connection.

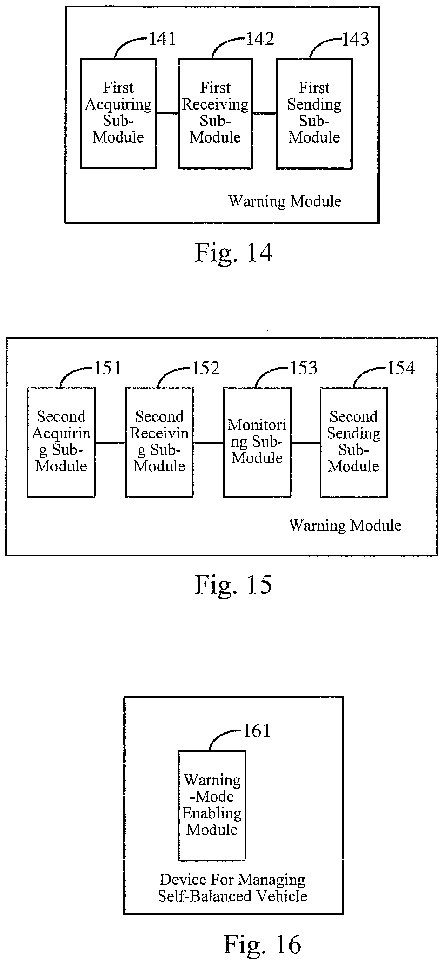

Fig. 14 is a block diagram of another device for managing a self-balanced vehicle according to an exemplary embodiment of the present invention, which is comprised in a user terminal. Based on the device as shown in Fig. 13, the warning module 135 can also include: a first acquiring sub-module 141, a first receiving sub-module 142 and a first sending sub-module 143.

The first acquiring sub-module 141 is configured to acquire a preset to-be-monitored item and a preset warning event, send the to-be-monitored item and the warning event to the self-balanced vehicle, such that the self-balanced vehicle monitors the to-be-monitored item in its traveling state data;
the first receiving sub-module 142 is configured to receive a warning message which is returned by the self-balanced vehicle through the Blue Tooth connection when the self-balanced vehicle monitors that the warning event is satisfied; and
the first sending sub-module 143 is configured to send the warning message which is returned by the self-balanced vehicle to the smart wearable device through the Blue Tooth connection, such that the smart wearable device performs warning.

Fig. 15 is a block diagram of another device for managing a self-balanced vehicle according to an exemplary embodiment of the present invention, which is comprised in a user terminal. Based on the device as shown in Fig. 13, the warning module 135 can also include: a second acquiring sub-module 151, a second receiving sub-module 152, a monitoring sub-module 153 and a second sending sub-module 154.

The second acquiring sub-module 151 is configured to acquire a preset to-be-monitored item and a preset warning event, and send the to-be-monitored item to the self-balanced vehicle;
the second receiving sub-module 152 is configured to receive real-time state data corresponding to the preset to-be-monitored item which is sent by the self-balanced vehicle; and
the monitoring sub-module 153 is configured to monitor the real-time state data and determine whether the warning event is satisfied; and
the second sending sub-module 154 is configured to, when the warning event is satisfied, send a warning message to the smart wearable device through the Blue Tooth connection such that the smart wearable device performs warning.

Fig. 16 is a block diagram of another device for managing a self-balanced vehicle according to an exemplary embodiment of the present invention, which is comprised in a user terminal. Based on the device as shown in Fig. 13, the device includes a warning-mode enabling module 161.

The warning-mode enabling module 161 is configured to receive an instruction for enabling the smart warning mode and enable the smart warning mode.

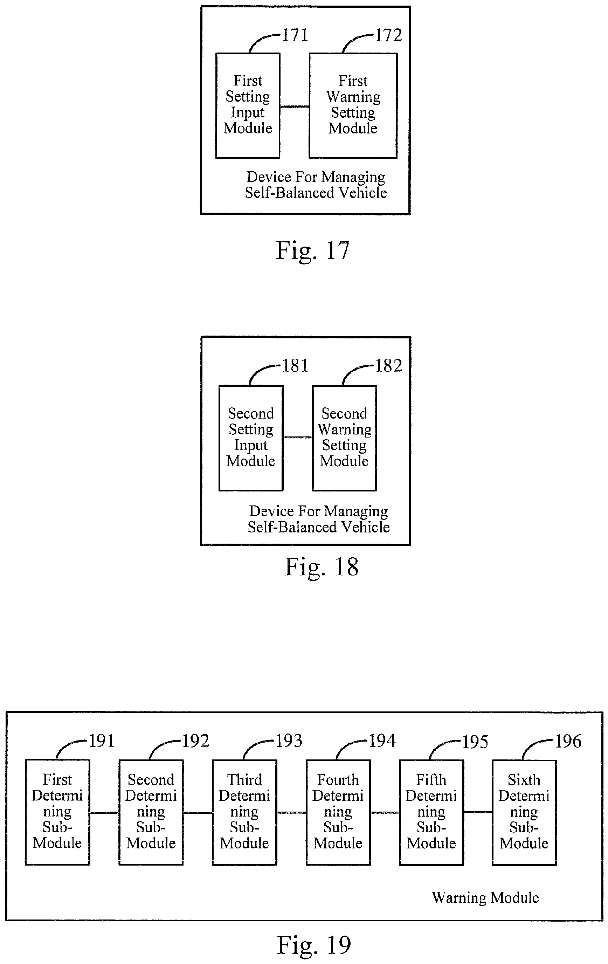

Fig. 17 is a block diagram of another device for managing a self-balanced vehicle according to an exemplary embodiment of the present invention, which is comprised in a user terminal. Based on the device as shown in Fig. 16, the device also includes: a first setting input module 171 and a first warning setting module 172.

The first setting input 171 is module configured to receive input settings of a to-be-monitored item and a warning event for the smart warning mode; and
the first warning setting module 172 is configured to set the to-be-monitored item and the warning event for the smart warning mode according to the input settings.

Fig. 18 is a block diagram of another device for managing a self-balanced vehicle according to an exemplary embodiment of the present invention, which is comprised in a user terminal. Based on the device as shown in Fig. 16, the device also includes: a second setting input module 181 and a second warning setting module 182.

The second setting input module 181 is configured to receive an input setting of a warning manner corresponding to the warning event; and
the second warning setting module 182 is configured to set the warning manner corresponding to the warning event according to the input setting.

Fig. 19 is a block diagram of another device for managing a self-balanced vehicle according to an exemplary embodiment of the present invention, which is comprised in a user terminal. Based on the device as shown in Fig. 13, the warning module 135 can also include at least one of the following modules: a first determining sub-module 191, a second determining sub-module 192, a third determining sub-module 193, a fourth determining sub-module 194, a fifth determining sub-module 195 and a sixth determining sub-module 196.

The first determining sub-module 191 is configured to acquire a preset to-be-monitored item and a preset warning event, monitor a remaining battery power of the self-balanced vehicle, determine whether the remaining battery power is below a power threshold, if the remaining battery power is below the power threshold, determine that the warning event is satisfied and send a warning message to the smart wearable device through the Blue Tooth connection;
the second determining sub-module 192 is configured to acquire a preset to-be-monitored item and a preset warning event, monitor a traveling speed of the self-balanced vehicle, determine whether the traveling speed is higher than a speed threshold, if the traveling speed is higher than the speed threshold, determine that the warning event is satisfied and send a warning message to the smart wearable device through the Blue Tooth connection;
the third determining sub-module 193 is configured to acquire a preset to-be-monitored item and a preset warning event, monitor a body temperature of the self-balanced vehicle, determine whether the body temperature is higher than a temperature threshold, if the body temperature is higher than the temperature threshold, determine that the warning event is satisfied and send a warning message to the smart wearable device through the Blue Tooth connection;
the fourth determining sub-module 194 is configured to acquire a preset to-be-monitored item and a preset warning event, monitor performance and operation condition of the self-balanced vehicle, determine whether a failure occurs, if a failure occurs, determine that the warning event is satisfied and send a warning message to the smart wearable device through the Blue Tooth connection;
the fifth determining sub-module 195 is configured to acquire a preset to-be-monitored item and a preset warning event, monitor a location of the self-balanced vehicle, determine whether the location has changed, if the location has changed, determine that the warning event is satisfied and send a warning message to the smart wearable device through the Blue Tooth connection; and/or
the sixth determining sub-module 196 is configured to acquire a preset to-be-monitored item and a preset warning event, monitor a locking state of the self-balanced vehicle, determine whether it is in an unlocking state, if it is in an unlocking state, determine that the warning event is satisfied and send a warning message to the smart wearable device through the Blue Tooth connection.

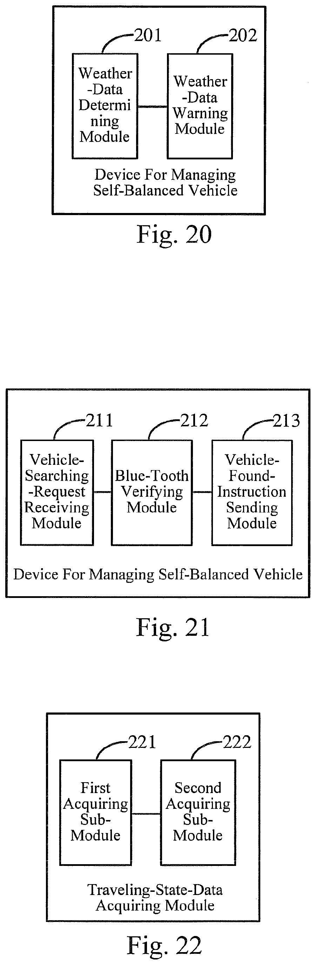

Fig. 20 is a block diagram of another device for managing a self-balanced vehicle according to an exemplary embodiment of the present invention, which is comprised in a user terminal. Based on the device as shown in Fig. 13, the device also includes: a weather-data determining module 201 and a weather-data warning module 202.

The weather-data determining module 201 is configured to, when the smart warning mode is enabled, acquire weather data and determine whether a preset warning event is satisfied according to the weather data; and
the weather-data warning module 202 is configured to, when the warning event is satisfied, send a warning message to the smart wearable device through the Blue Tooth connection.

Fig. 21 is a block diagram of another device for managing a self-balanced vehicle according to an exemplary embodiment of the present invention, which is comprised in a user terminal. Based on the device as shown in Fig. 13, the device also includes: a vehicle-searching-request receiving module 211, a Blue-Tooth verifying module 212 and a vehicle-found-instruction sending module 213.

The vehicle-searching-request receiving module 211 is configured to receive a vehicle searching request which is sent by the smart wearable device; and
the Blue-Tooth verifying module 212 is configured to search for the self-balanced vehicle through Blue Tooth according to the vehicle searching request and detect whether the Blue Tooth connection with the self-balanced vehicle is established; and
the vehicle-found-instruction sending module 213 is configured to, if the Blue Tooth connection with the self-balanced vehicle is established, send a vehicle found instruction to the self-balanced vehicle such that the self-balanced vehicle performs a vehicle found warning.

Fig. 22 is a block diagram of another device for managing a self-balanced vehicle according to an exemplary embodiment of the present invention, which is comprised in a user terminal. Based on the device as shown in Fig. 13, the traveling-state-data acquiring module 132 also includes: a first acquiring sub-module 221 and a second acquiring sub-module 222.

The first acquiring sub-module 221 is configured to receive traveling state data of the self-balanced vehicle which is sent by the self-balanced vehicle periodically through the Blue Tooth connection; or
the second acquiring sub-module 222 is configured to send a state acquiring instruction periodically to the self-balanced vehicle and receive traveling state data of the self-balanced vehicle which is returned by the self-balanced vehicle according to the state acquiring instruction.

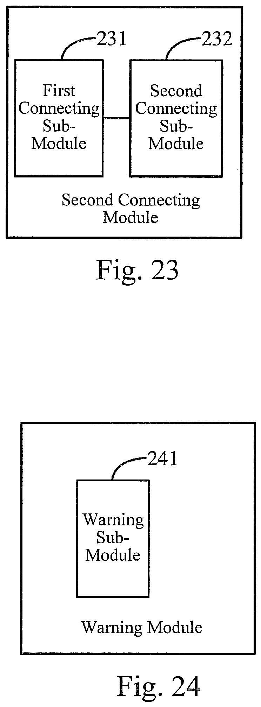

Fig. 23 is a block diagram of another device for managing a self-balanced vehicle according to an exemplary embodiment of the present invention, which is comprised in a user terminal. Based on the device as shown in Fig. 13, the second connecting module 134 also includes: a first connecting sub-module 231 or a second connecting sub-module 232.

The first connecting sub-module 231 is configured to, when a plurality of smart wearable devices is searched out, receive a user selection instruction with respect to a smart wearable device, and connect the smart wearable device selected by the user according to the user selection instruction; or
the second connecting sub-module 232 is configured to, when a plurality of smart wearable devices is searched out, connect a smart wearable device with the highest priority according to a preset priority order.

Fig. 24 is a block diagram of another device for managing a self-balanced vehicle according to an exemplary embodiment of the present invention, which is comprised in a user terminal. Based on the device as shown in Fig. 13, the warning module 135 also includes a warning sub-module 241.

The warning sub-module 241 is configured to, if the warning event is satisfied, send the warning event and a corresponding preset warning manner to the smart wearable device through the Blue Tooth connection, such that the smart wearable device performs warning according to the preset warning manner.

Corresponding to Fig. 13, the present invention also provides another device for managing a self-balanced vehicle, including:
a processor; and
a memory for storing instructions executable by the processor;
wherein the processor is configured to perform:
establishing a connection with the self-balanced vehicle through Blue Tooth;
acquiring traveling state data of the self-balanced vehicle through the connection;
determining whether a smart warning mode is enabled;
if the smart warning mode is enabled, establishing a connection with a smart wearable device through Blue Tooth; and
acquiring a preset to-be-monitored item and a preset warning event, monitoring the to-be-monitored item in the traveling state data and determining whether the warning event is satisfied, and if the warning event is satisfied, sending a warning message to the smart wearable device through the Blue Tooth connection.

Implementation of the functions and operations of the modules in the above devices can be specifically referred to the implementation of the corresponding steps in the above methods, which will not be repeated herein.

For the device embodiments, since they correspond to the method embodiments, they can be referred to the related part of the description of the method embodiments. The device embodiments described above are merely illustrative. The units described as separate may be or may not be physically separate, and the components illustrated as a units may be or may not be physical units, and may be at the same location, or may be distributed to multiple units over the network. A part of or all of the modules can be selected to achieve the objective of the present invention as desired. One skilled in the art can understand and practice the embodiments without paying creative labor.

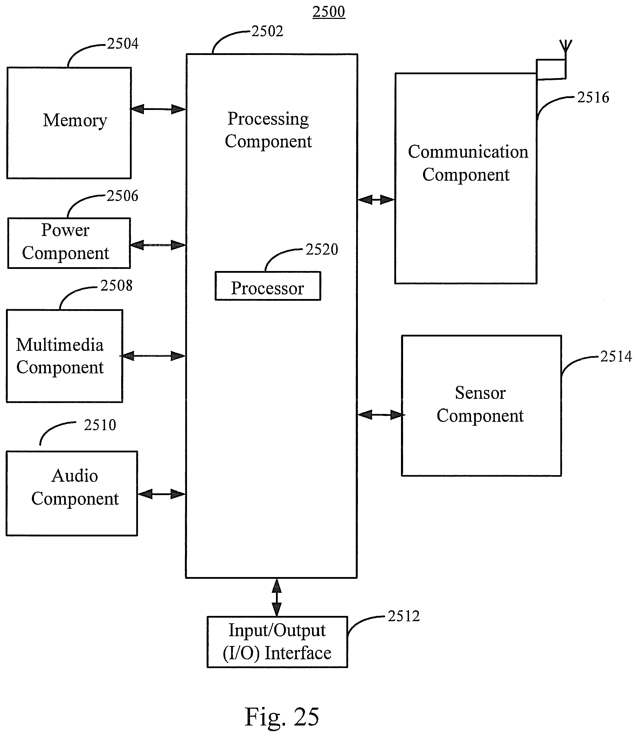

Fig. 25 is a block diagram of a device 2500 (at a terminal side) for managing a self-balanced vehicle according to an exemplary embodiment. For example, the device 2500 may be a mobile phone with routing function, a computer, a digital broadcast terminal, a messaging device, a gaming console, a tablet, a medical device, exercise equipment, a personal digital assistant, and the like.

Referring to Fig. 25, the device 2500 may include one or more of the following components: a processing component 2502, a memory 2504, a power component 2506, a multimedia component 2508, an audio component 2510, an input/output (I/O) interface 2512, a sensor component 2514, and a communication component 2516.

The processing component 2502 typically controls overall operations of the device 2500, such as the operations associated with display, telephone calls, data communications, camera operations, and recording operations. The processing component 2502 may include one or more processors 2520 to execute instructions to perform all or part of the steps in the above described methods. Moreover, the processing component 2502 may include one or more modules which facilitate the interaction between the processing component 2502 and other components. For instance, the processing component 2502 may include a multimedia module to facilitate the interaction between the multimedia component 2508 and the processing component 2502.

The memory 2504 is configured to store various types of data to support the operation of the device 2500. Examples of such data include instructions for any applications or methods operated on the device 2500, contact data, phonebook data, messages, pictures, video, etc. The memory 2504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2506 provides power to various components of the device 2500. The power component 2506 may include a power management system, one or more power sources, and any other components associated with the generation, management, and distribution of power in the device 2500.

The multimedia component 2508 includes a screen providing an output interface between the device 2500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2508 includes a front camera and/or a rear camera. The front camera and the rear camera may receive an external multimedia datum while the device 2500 is in an operation mode, such as a photographing mode or a video mode. Each of the front camera and the rear camera may be a fixed optical lens system or have focus and optical zoom capability.

The audio component 2510 is configured to output and/or input audio signals. For example, the audio component 2510 includes a microphone ("MIC") configured to receive an external audio signal when the device 2500 is in an operation mode, such as a call mode, a recording mode, and a voice recognition mode. The received audio signal may be further stored in the memory 2504 or transmitted via the communication component 2516. In some embodiments, the audio component 2510 further includes a speaker to output audio signals.

The I/O interface 2512 provides an interface between the processing component 2502 and peripheral interface modules, such as a keyboard, a click wheel, buttons, and the like. The buttons may include, but are not limited to, a home button, a volume button, a starting button, and a locking button.

The sensor component 2514 includes one or more sensors to provide status assessments of various aspects of the device 2500. For instance, the sensor component 2514 may detect an open/closed status of the device 2500, relative positioning of components, e.g., the display and the keypad, of the device 2500, a change in position of the device 2500 or a component of the device 2500, a presence or absence of user contact with the device 2500, an orientation or an acceleration/deceleration of the device 2500, and a change in temperature of the device 2500. The sensor component 2514 may include a proximity sensor configured to detect the presence of nearby objects without any physical contact. The sensor component 2514 may also include a light sensor, such as a CMOS or CCD image sensor, for use in imaging applications. In some embodiments, the sensor component 2514 may also include an accelerometer sensor, a gyroscope sensor, a magnetic sensor, a pressure sensor, a microwave sensor or a temperature sensor.

The communication component 2516 is configured to facilitate communication, wired or wirelessly, between the device 2500 and other devices. The device 2500 can access a wireless network based on a communication standard, such as WiFi, 2G, or 3G, or a combination thereof. In one exemplary embodiment, the communication component 2516 receives a broadcast signal or broadcast associated information from an external broadcast management system via a broadcast channel. In one exemplary embodiment, the communication component 2516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 2500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 2504, executable by the processor 2520 in the device 2500, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of a mobile terminal, the mobile terminal is caused to perform the method for managing a self-balanced vehicle. The method includes:
establishing a connection with the self-balanced vehicle through Blue Tooth;
acquiring traveling state data of the self-balanced vehicle through the connection;
determining whether a smart warning mode is enabled;
if the smart warning mode is enabled, establishing a connection with a smart wearable device through Blue Tooth; and
acquiring a preset to-be-monitored item and a preset warning event, monitoring the to-be-monitored item in the traveling state data and determining whether the warning event is satisfied, and if the warning event is satisfied, sending a warning message to the smart wearable device through the Blue Tooth connection.

## Claims

1. A method for managing a self-balanced vehicle, which is performed by a terminal, **characterized in that** the method comprises:
establishing (110) a first connection with the self-balanced vehicle through Blue Tooth;
acquiring (120) traveling state data of the self-balanced vehicle through the first connection;
determining (130) whether a smart warning mode is enabled;
if the smart warning mode is enabled, establishing (140) a second connection with a smart wearable device through Blue Tooth; and
acquiring (150) a preset to-be-monitored item and a preset warning event, monitoring the to-be-monitored item in the traveling state data and determining whether the warning event is satisfied, and if the warning event is satisfied, sending a warning message to the smart wearable device through the second Blue Tooth connection.

2. The method of claim 1, wherein the step of acquiring (150) a preset to-be-monitored item and a warning event, monitoring the to-be-monitored item in the traveling state data and determining whether the warning event is satisfied, and if the warning event is satisfied, sending a warning message to the smart wearable device through the second Blue Tooth connection, comprises:
acquiring (210) a preset to-be-monitored item and a preset warning event, sending the to-be-monitored item and the warning event to the self-balanced vehicle, such that the self-balanced vehicle monitors the to-be-monitored item in its traveling state data;
receiving (220) a warning message which is returned by the self-balanced vehicle through the first Blue Tooth connection when the self-balanced vehicle monitors that the warning event is satisfied; and
sending (230) the warning message which is returned by the self-balanced vehicle to the smart wearable device through the second Blue Tooth connection, such that the smart wearable device performs warning.

3. The method of claim 1, wherein the step of acquiring (150) a preset to-be-monitored item and a warning event, monitoring the to-be-monitored item in the traveling state data and determining whether the warning event is satisfied, and if the warning event is satisfied, sending a warning message to the smart wearable device through the second Blue Tooth connection, comprises:
acquiring (310) a preset to-be-monitored item and a preset warning event, and sending the to-be-monitored item to the self-balanced vehicle;
receiving (320) real-time state data corresponding to the preset to-be-monitored item which is sent by the self-balanced vehicle; and
monitoring (330) the real-time state data and determining whether the warning event is satisfied; and
when the warning event is satisfied, sending (340) a warning message to the smart wearable device through the second Blue Tooth connection such that the smart wearable device performs warning.

4. The method of claim 1, wherein the method further comprises:
receiving an instruction for enabling the smart warning mode and enabling the smart warning mode.

5. The method of claim 4, wherein the step of enabling the smart warning mode further comprises:
receiving (410) input settings of a to-be-monitored item and a warning event for the smart warning mode; and
setting (420) the to-be-monitored item and the warning event for the smart warning mode according to the input settings.

6. The method of claim 4, wherein the step of enabling the smart warning mode further comprises:
receiving (510) an input setting of a warning manner corresponding to the warning event; and
setting (520) the warning manner corresponding to the warning event according to the input setting.

7. The method of claim 1, wherein the method further comprises:
when the smart warning mode is enabled, acquiring (710) weather data and determining whether a preset warning event is satisfied according to the weather data; and
when the warning event is satisfied, sending (720) a warning message to the smart wearable device through the second Blue Tooth connection.

8. The method of claim 1, wherein the method further comprises:
receiving (810) an unlocking request which is sent by the smart wearable device; and
sending (820) an unlocking instruction to the self-balanced vehicle according to the unlocking request, such that the self-balanced vehicle releases a locking state according to the received unlocking instruction.

9. The method of claim 1, wherein the method further comprises:
receiving (910) a vehicle searching request which is sent by the smart wearable device; and
searching (920) for the self-balanced vehicle through Blue Tooth according to the vehicle searching request and detecting whether the first Blue Tooth connection with the self-balanced vehicle is established; and
if the first Blue Tooth connection with the self-balanced vehicle is established, sending (930) a vehicle found instruction to the self-balanced vehicle such that the self-balanced vehicle performs a vehicle found warning.

10. The method of claim 1, wherein the step of acquiring (120) traveling state data of the self-balanced vehicle through the first connection comprises:
receiving (101) traveling state data of the self-balanced vehicle which is sent by the self-balanced vehicle periodically through the first Blue Tooth connection; or
sending (102) a state acquiring instruction periodically to the self-balanced vehicle and receiving traveling state data of the self-balanced vehicle which is returned by the self-balanced vehicle according to the state acquiring instruction.

11. The method of claim 1, wherein the step of establishing (110) a second connection with a smart
wearable device through Blue Tooth comprises:
when searching out a plurality of smart wearable devices, receiving (111) a user selection instruction with respect to a smart wearable device, and connecting the smart wearable device selected by the user according to the user selection instruction; or
when searching out a plurality of smart wearable devices, connecting (112) a smart wearable device with the highest priority according to a preset priority order.

12. The method of claim 1, wherein if the warning event is satisfied, the sending of a warning message to the smart wearable device through the second Blue Tooth connection,
comprises:
if the warning event is satisfied, sending the warning event and a corresponding preset warning manner to the smart wearable device through the second Blue Tooth connection, such that the smart wearable device performs warning according to the preset warning manner.

13. A device for managing a self-balanced vehicle, which is comprised in a terminal, **characterized in that** the device comprises:
a first connecting module (131) configured to establish a first connection with the self-balanced vehicle through Blue Tooth;
a traveling-state-data acquiring module (132) configured to acquire traveling state data of the self-balanced vehicle through the first connection;
a warning-mode determining module (133) configured to determine whether a smart warning mode is enabled;
a second connecting module (134) configured to, if the smart warning mode is enabled, establish a second
connection with a smart wearable device through Blue Tooth; and
a warning module (135) configured to acquire a preset to-be-monitored item and a preset warning event, monitor the to-be-monitored item in the traveling state data and determine whether the warning event is satisfied, and if the warning event is satisfied, send a warning message to the smart wearable device through the second Blue Tooth connection.

14. The device of claim 13, wherein the warning module (135) comprises:
a first acquiring sub-module (141) configured to acquire a preset to-be-monitored item and a preset warning event, send the to-be-monitored item and the warning event to the self-balanced vehicle, such that the self-balanced vehicle monitors the to-be-monitored item in its traveling state data;
a first receiving sub-module (142) configured to receive a warning message which is returned by the self-balanced vehicle through the first Blue Tooth connection when the self-balanced vehicle monitors that the warning event is satisfied; and
a first sending sub-module (143) configured to send the warning message which is returned by the self-balanced vehicle to the smart wearable device through the second Blue Tooth connection, such that the smart wearable device performs warning.

15. The device of claim 13, wherein the warning module (135) comprises:
a second acquiring sub-module (151) configured to acquire a preset to-be-monitored item and a preset warning event, and send the to-be-monitored item to the self-balanced vehicle;
a second receiving sub-module (152) configured to receive real-time state data corresponding to the preset to-be-monitored item which is sent by the self-balanced vehicle; and
a monitoring sub-module (153) configured to monitor the real-time state data and determine whether the warning event is satisfied; and
a second sending sub-module (154) configured to, when the warning event is satisfied, send a warning message to the smart wearable device through the second Blue Tooth connection such that the smart wearable device performs warning.

## Patentansprüche

1. Verfahren zum Managen eines sich selbst austarierenden Fahrzeugs, welches von einem Endgerät durchgeführt wird, **dadurch gekennzeichnet, dass** das Verfahren umfasst:
Aufbauen (110) einer ersten Verbindung mit dem sich selbst austarierenden Fahrzeug über Bluetooth,
Erfassen (120) von Fahrzustandsdaten des sich selbst austarierenden Fahrzeugs über die erste Verbindung,
Bestimmen (130), ob ein intelligenter Warnmodus aktiviert ist,
wenn der intelligente Warnmodus aktiviert ist, Aufbauen (140) einer zweiten Verbindung mit einer intelligenten tragbaren Vorrichtung über Bluetooth und
Erfassen (150) eines vorab festgelegten zu überwachenden Elements und eines vorab festgelegten Warnereignisses, Überwachen des zu überwachenden Elements in den Fahrzustandsdaten und Bestimmen, ob das Warnereignis eintritt, und wenn das Warnereignis eintritt, Senden einer Warnnachricht zu der intelligenten tragbaren Vorrichtung über die zweite Bluetooth-Verbindung.

2. Verfahren nach Anspruch 1, wobei der Schritt des Erfassens (150) eines vorab festgelegten zu überwachenden Elements und eines Warnereignisses, Überwachens des zu überwachenden Elements in den Fahrzustandsdaten und Bestimmens, ob das Warnereignis eintritt, und wenn das Warnereignis eintritt, Sendens einer Warnnachricht zu der intelligenten tragbaren Vorrichtung über die zweite Bluetooth-Verbindung umfasst:
Erfassen (210) eines vorab festgelegten zu überwachenden Elements und eines vorab festgelegten Warnereignisses, Senden des zu überwachenden Elements und des Warnereignisses zu dem sich selbst austarierenden Fahrzeug, so dass das sich selbst austarierende Fahrzeug das zu überwachende Element in seinen Fahrzustandsdaten überwacht,
Empfangen (220) einer Warnnachricht, welche von dem sich selbst austarierenden Fahrzeug über die erste Bluetooth-Verbindung zurückgegeben wird, wenn das sich selbst austarierende Fahrzeug überwacht, dass das Warnereignis eintritt, und
Senden (230) der Warnnachricht, welche von dem sich selbst austarierenden Fahrzeug zurückgegeben wird, zu der intelligenten tragbaren Vorrichtung über die zweite Bluetooth-Verbindung, so dass die intelligente tragbare Vorrichtung ein Warnen durchführt.

3. Verfahren nach Anspruch 1, wobei der Schritt des Erfassens (150) eines vorab festgelegten zu überwachenden Elements und eines Warnereignisses, Überwachens des zu überwachenden Gegenstands in den Fahrzustandsdaten und Bestimmens, ob das Warnereignis eintritt, und wenn das Warnereignis eintritt, Sendens einer Warnnachricht zu der intelligenten tragbaren Vorrichtung über die zweite Bluetooth-Verbindung umfasst:
Erfassen (310) eines vorab festgelegten zu überwachenden Elements und eines vorab festgelegten Warnereignisses, und Senden des zu überwachenden Elements zu dem sich selbst austarierenden Fahrzeug,
Empfangen (320) von Echtzeitzustandsdaten entsprechend dem vorab festgelegten zu überwachenden Element, welche von dem sich selbst austarierenden Fahrzeug gesendet werden, und
Überwachen (330) der Echtzeitzustandsdaten und Bestimmen, ob das Warnereignis eintritt, und,
wenn das Warnereignis eintritt, Senden (340) einer Warnnachricht zu der intelligenten tragbaren Vorrichtung über die zweite Bluetooth-Verbindung, so dass die intelligente tragbare Vorrichtung ein Warnen durchführt.

4. Verfahren nach Anspruch 1, wobei das Verfahren ferner umfasst:
Erhalten eines Befehls zum Aktivieren des intelligenten Warnmodus und Aktivieren des intelligenten Warnmodus.

5. Verfahren nach Anspruch 4, wobei der Schritt des Aktivierens des intelligenten Warnmodus ferner umfasst:
Erhalten (410) von Eingabeeinstellungen eines zu überwachenden Elements und eines Warnereignisses für den intelligenten Warnmodus und
Einstellen (420) des zu überwachenden Elements und des Warnereignisses für den intelligenten Warnmodus gemäß den Eingabeeinstellungen.

6. Verfahren nach Anspruch 4, wobei der Schritt des Aktivierens des intelligenten Warnmodus ferner umfasst:
Erhalten (510) einer Eingabeeinstellung einer Warnart entsprechend dem Warnereignis und
Einstellen (520) der Warnart entsprechend dem Warnereignis gemäß der Eingabeeinstellung.

7. Verfahren nach Anspruch 1, wobei das Verfahren ferner umfasst:
wenn der intelligente Warnmodus aktiviert ist, Erfassen (710) von Wetterdaten und bestimmen, ob ein vorab festgelegtes Warnereignis eintritt, gemäß den Wetterdaten, und
wenn das Warnereignis eintritt, Senden (720) einer Warnnachricht zu der intelligenten tragbaren Vorrichtung über die zweite Bluetooth-Verbindung.

8. Verfahren nach Anspruch 1, wobei das Verfahren ferner umfasst:
Erhalten (810) einer Entsperrungsanfrage, welche von der intelligenten tragbaren Vorrichtung gesendet wird, und
Senden (820) eines Entsperrungsbefehls zu dem sich selbst austarierenden Fahrzeug gemäß der Entsperrungsanfrage, so dass das sich selbst austarierende Fahrzeug einen Sperrzustand gemäß dem erhaltenen Entsperrungsbefehl freigibt.

9. Verfahren nach Anspruch 1, wobei das Verfahren ferner umfasst:
Erhalten (910) einer Fahrzeugsuchanfrage, welche von der intelligenten tragbaren Vorrichtung gesendet wird, und
Suchen (920) nach dem sich selbst austarierenden Fahrzeug über Bluetooth gemäß der Fahrzeugsuchanfrage und Feststellen, ob die erste Bluetooth-Verbindung mit dem sich selbst austarierenden Fahrzeug aufgebaut ist, und,
wenn die erste Bluetooth-Verbindung mit dem sich selbst austarierenden Fahrzeug aufgebaut ist, Senden (930) eines Fahrzeugfundbefehls zu dem sich selbst austarierenden Fahrzeug, so dass das sich selbst austarierende Fahrzeug eine Fahrzeugfundwarnung durchführt.

10. Verfahren nach Anspruch 1, wobei der Schritt des Erfassens (120) von Fahrzustandsdaten des sich selbst austarierenden Fahrzeugs über die erste Verbindung umfasst:
Erhalten (101) von Fahrzustandsdaten des sich selbst austarierenden Fahrzeugs, welche von dem sich selbst austarierenden Fahrzeug in regelmäßigen Abständen über die erste Bluetooth-Verbindung gesendet werden, oder
periodisches Senden (102) eines Zustandserfassungsbefehls zu dem sich selbst austarierenden Fahrzeug und Erhalten von Fahrzustandsdaten des sich selbst austarierenden Fahrzeugs, welche von dem sich selbst austarierenden Fahrzeug gemäß dem Zustandserfassungsbefehl zurückgegeben werden.

11. Verfahren nach Anspruch 1, wobei der Schritt des Aufbauens (110) einer zweiten Verbindung mit einer intelligenten tragbaren Vorrichtung über Bluetooth umfasst:
wenn mehrere intelligente tragbare Vorrichtungen aufgespürt werden, Erhalten (111) eines Benutzerauswahlbefehls bezüglich einer intelligenten tragbaren Vorrichtung und Verbinden der intelligenten tragbaren Vorrichtung, die von dem Benutzer gemäß dem Benutzerauswahlbefehl ausgewählt wurde, oder
wenn mehrere intelligente tragbare Vorrichtungen aufgespürt werden, Verbinden (112) einer intelligenten tragbaren Vorrichtung mit der höchsten Priorität gemäß einer vorab festgelegten Prioritätsreihenfolge.

12. Verfahren nach Anspruch 1, wobei, wenn das Warnereignis eintritt, das Senden einer Warnnachricht zu der intelligenten tragbaren Vorrichtung über die zweite Bluetooth-Verbindung umfasst:
wenn das Warnereignis eintritt, Senden des Warnereignisses und einer entsprechenden vorab festgelegten Warnart zu der intelligenten tragbaren Vorrichtung über die zweite Bluetooth-Verbindung, so dass die intelligente tragbare Vorrichtung ein Warnen gemäß der vorab festgelegten Warnart durchführt.

13. Vorrichtung zum Managen eines sich selbst austarierenden Fahrzeugs, welche in einem Endgerät enthalten ist, **dadurch gekennzeichnet, dass** die Vorrichtung umfasst:
ein erstes Verbindungsmodul (131), das konfiguriert ist, um eine erste Verbindung mit dem sich selbst austarierenden Fahrzeug über Bluetooth aufzubauen,
ein Fahrzustandsdatenerfassungsmodul (132), das konfiguriert ist, um Fahrzustandsdaten des sich selbst austarierenden Fahrzeugs über die erste Verbindung zu erfassen,
ein Warnmodusbestimmungsmodul (133), das konfiguriert ist, um zu bestimmen, ob ein intelligenter Warnmodus aktiviert ist,
ein zweites Verbindungsmodul (134), das konfiguriert ist, um, wenn der intelligente Warnmodus aktiviert ist, eine zweite Verbindung mit einer intelligenten tragbaren Vorrichtung über Bluetooth aufzubauen, und
ein Warnmodul (135), das konfiguriert ist, um ein vorab festgelegtes zu überwachendes Element und ein vorab festgelegtes Warnereignis zu erfassen, das zu überwachende Element in den Fahrzustandsdaten zu überwachen und zu bestimmen, ob das Warnereignis eintritt, und wenn das Warnereignis eintritt, eine Warnnachricht zu der intelligenten tragbaren Vorrichtung über die zweite Bluetooth-Verbindung zu senden.

14. Vorrichtung nach Anspruch 13, wobei das Warnmodul (135) umfasst:
ein erstes Erfassungsteilmodul (141), das konfiguriert ist, um ein vorab festgelegtes zu überwachendes Element und ein vorab festgelegtes Warnereignis zu erfassen, das zu überwachende Element und das Warnereignis zu dem sich selbst austarierenden Fahrzeug zu senden, so dass das sich selbst austarierende Fahrzeug das zu überwachende Element in seinen Fahrzustandsdaten überwacht,
ein erstes Empfangsteilmodul (142), das konfiguriert ist, um eine Warnnachricht zu empfangen, welche von dem sich selbst austarierenden Fahrzeug über die erste Bluetooth-Verbindung zurückgegeben wird, wenn das sich selbst austarierende Fahrzeug überwacht, dass das Warnereignis eintritt, und
ein erstes Sendeteilmodul (143), das konfiguriert ist, um die Warnnachricht, welche von dem sich selbst austarierenden Fahrzeug zurückgegeben wird, zu der intelligenten tragbaren Vorrichtung über die zweite Bluetooth-Verbindung zu senden, so dass die intelligente tragbare Vorrichtung ein Warnen durchführt.

15. Vorrichtung nach Anspruch 13, wobei das Warnmodul (135) umfasst:
ein zweites Erfassungsteilmodul (151), das konfiguriert ist, um ein vorab festgelegtes zu überwachendes Element und ein vorab festgelegtes Warnereignis zu erfassen und das zu überwachende Element zu dem sich selbst austarierenden Fahrzeug zu senden,
ein zweites Empfangsteilmodul (152), das konfiguriert ist, um Echtzeitzustandsdaten entsprechend dem vorab festgelegten zu überwachenden Element zu empfangen, welche von dem sich selbst austarierenden Fahrzeug gesendet werden, und
ein Überwachungsteilmodul (153), das konfiguriert ist, um die Echtzeitzustandsdaten zu überwachen und zu bestimmen, ob das Warnereignis eintritt, und
ein zweites Sendeteilmodul (154), das konfiguriert ist, um, wenn das Warnereignis eintritt, eine Warnnachricht zu der intelligenten tragbaren Vorrichtung über die zweite Bluetooth-Verbindung zu senden, so dass die intelligente tragbare Vorrichtung ein Warnen durchführt.

## Revendications

1. Procédé pour gérer un véhicule auto-équilibré, qui est effectué par un terminal, **caractérisé en ce que** le procédé comprend :
l'établissement (110) d'une première connexion avec le véhicule auto-équilibré par l'intermédiaire de Blue Tooth ;
l'acquisition (120) de données d'état de déplacement du véhicule auto-équilibré par l'intermédiaire de la première connexion ;
la détermination (130) de si un mode d'avertissement intelligent est activé ;
si le mode d'avertissement intelligent est activé, l'établissement (140) d'une seconde connexion avec un dispositif portable intelligent par l'intermédiaire de Blue Tooth ; et
l'acquisition (150) d'un élément à surveiller prédéfini et d'un événement d'avertissement prédéfini, la surveillance de l'élément à surveiller dans les données d'état de déplacement et la détermination de si l'événement d'avertissement est satisfait, et si l'événement d'avertissement est satisfait, l'envoi d'un message d'avertissement au dispositif portable intelligent par l'intermédiaire de la seconde connexion Blue Tooth.

2. Procédé selon la revendication 1, dans lequel l'étape d'acquisition (150) d'un élément à surveiller prédéfini et d'un événement d'avertissement, de surveillance de l'élément à surveiller dans les données d'état de déplacement et de détermination de si l'événement d'avertissement est satisfait, et si l'événement d'avertissement est satisfait, d'envoi d'un message d'avertissement au dispositif portable intelligent par l'intermédiaire de la seconde connexion Blue Tooth, comprend :
l'acquisition (210) d'un élément à surveiller prédéfini et d'un événement d'avertissement prédéfini, l'envoi de l'élément à surveiller et de l'événement d'avertissement au véhicule auto-équilibré, de sorte que le véhicule auto-équilibré surveille l'élément à surveiller dans ses données d'état de déplacement ;
la réception (220) d'un message d'avertissement qui est retourné par le véhicule auto-équilibré par l'intermédiaire de la première connexion Blue Tooth lorsque le véhicule auto-équilibré surveille que l'événement d'avertissement est satisfait ; et
l'envoi (230) du message d'avertissement qui est retourné par le véhicule auto-équilibré au dispositif portable intelligent par l'intermédiaire de la seconde connexion Blue Tooth, de sorte que le dispositif portable intelligent effectue un avertissement.

3. Procédé selon la revendication 1, dans lequel l'étape d'acquisition (150) d'un élément à surveiller prédéfini et d'un événement d'avertissement, de surveillance de l'élément à surveiller dans les données d'état de déplacement et de détermination de si l'événement d'avertissement est satisfait, et si l'événement d'avertissement est satisfait, d'envoi d'un message d'avertissement au dispositif portable intelligent par l'intermédiaire de la seconde connexion Blue Tooth, comprend :
l'acquisition (310) d'un élément à surveiller prédéfini et d'un événement d'avertissement prédéfini, et l'envoi de l'élément à surveiller au véhicule auto-équilibré;
la réception (320) de données d'état en temps réel correspondant à l'élément à surveiller prédéfini qui est envoyé par le véhicule auto-équilibré ; et
la surveillance (330) des données d'état en temps réel et la détermination de si l'événement d'avertissement est satisfait ; et
lorsque l'événement d'avertissement est satisfait, l'envoi (340) d'un message d'avertissement au dispositif portable intelligent par l'intermédiaire de la seconde connexion Blue Tooth de sorte que le dispositif portable intelligent effectue un avertissement.

4. Procédé selon la revendication 1, dans lequel le procédé comprend en outre :
la réception d'une instruction pour activer le mode d'avertissement intelligent et l'activation du mode d'avertissement intelligent.

5. Procédé selon la revendication 4, dans lequel l'étape d'activation du mode d'avertissement intelligent comprend en outre :
la réception (410) de réglages d'entrée d'un élément à surveiller et d'un événement d'avertissement pour le mode d'avertissement intelligent ; et
le réglage (420) de l'élément à surveiller et de l'événement d'avertissement pour le mode d'avertissement intelligent en fonction des réglages d'entrée.

6. Procédé selon la revendication 4, dans lequel l'étape d'activation du mode d'avertissement intelligent comprend en outre :
la réception (510) d'un réglage d'entrée d'une manière d'avertissement correspondant à l'événement d'avertissement ; et
le réglage (520) de la manière d'avertissement correspondant à l'événement d'avertissement en fonction du réglage d'entrée.

7. Procédé selon la revendication 1, dans lequel le procédé comprend en outre :
lorsque le mode d'avertissement intelligent est activé, l'acquisition (710) de données météorologiques et la détermination de si un événement d'avertissement prédéfini est satisfait en fonction des données météorologiques ; et
lorsque l'événement d'avertissement est satisfait, l'envoi (720) d'un message d'avertissement au dispositif portable intelligent par l'intermédiaire de la seconde connexion Blue Tooth.

8. Procédé selon la revendication 1, dans lequel le procédé comprend en outre :
la réception (810) d'une requête de déverrouillage qui est envoyée par le dispositif portable intelligent ; et
l'envoi (820) d'une instruction de déverrouillage au véhicule auto-équilibré en fonction de la requête de déverrouillage, de sorte que le véhicule auto-équilibré libère un état de verrouillage en fonction de l'instruction de déverrouillage reçue.

9. Procédé selon la revendication 1, dans lequel le procédé comprend en outre :
la réception (910) d'une requête de recherche de véhicule qui est envoyée par le dispositif portable intelligent ; et
la recherche (920) du véhicule auto-équilibré par l'intermédiaire de Blue Tooth en fonction de la requête de recherche de véhicule et la détection de si la première connexion Blue Tooth avec le véhicule auto-équilibré est établie ; et
si la première connexion Blue Tooth avec le véhicule auto-équilibré est établie, l'envoi (930) d'une instruction de véhicule trouvé au véhicule auto-équilibré de sorte que le véhicule auto-équilibré effectue un avertissement de véhicule trouvé.

10. Procédé selon la revendication 1, dans lequel l'étape d'acquisition (120) de données d'état de déplacement du véhicule auto-équilibré par l'intermédiaire de la première connexion comprend :
la réception (101) de données d'état de déplacement du véhicule auto-équilibré qui sont envoyées par le véhicule auto-équilibré périodiquement par l'intermédiaire de la première connexion Blue Tooth ; ou
l'envoi (102) d'une instruction d'acquisition d'état périodiquement au véhicule auto-équilibré et la réception de données d'état de déplacement du véhicule auto-équilibré qui sont retournées par le véhicule auto-équilibré en fonction de l'instruction d'acquisition d'état.

11. Procédé selon la revendication 1, dans lequel l'étape d'établissement (110) d'une seconde connexion avec un dispositif portable intelligent par l'intermédiaire de Blue Tooth comprend :
lors de la recherche d'une pluralité de dispositifs portables intelligents, la réception (111) d'une instruction de sélection d'utilisateur relativement à un dispositif portable intelligent, et la connexion du dispositif portable intelligent sélectionné par l'utilisateur en fonction de l'instruction de sélection d'utilisateur ; ou
lors de la recherche d'une pluralité de dispositifs portables intelligents, la connexion (112) d'un dispositif portable intelligent ayant la priorité la plus élevée en fonction d'un ordre de priorité prédéfini.

12. Procédé selon la revendication 1, dans lequel si l'événement d'avertissement est satisfait, l'envoi d'un message d'avertissement au dispositif portable intelligent par l'intermédiaire de la seconde connexion Blue Tooth, comprend :
si l'événement d'avertissement est satisfait, l'envoi de l'événement d'avertissement et d'une manière d'avertissement prédéfinie correspondante au dispositif portable intelligent par l'intermédiaire de la seconde connexion Blue Tooth, de sorte que le dispositif portable intelligent effectue un avertissement en fonction de la manière d'avertissement prédéfinie.

13. Dispositif pour gérer un véhicule auto-équilibré, qui est compris dans un terminal, **caractérisé en ce que** le dispositif comprend :
un premier module de connexion (131) configuré pour établir une première connexion avec le véhicule auto-équilibré par l'intermédiaire de Blue Tooth ;
un module d'acquisition de données d'état de déplacement (132) configuré pour acquérir des données d'état de déplacement du véhicule auto-équilibré par l'intermédiaire de la première connexion ;
un module de détermination de mode d'avertissement (133) configuré pour déterminer si un mode d'avertissement intelligent est activé ;
un second module de connexion (134) configuré pour, si le mode d'avertissement intelligent est activé, établir une seconde connexion avec un dispositif portable intelligent par l'intermédiaire de Blue Tooth ; et
un module d'avertissement (135) configuré pour acquérir un élément à surveiller prédéfini et un événement d'avertissement prédéfini, surveiller l'élément à surveiller dans les données d'état de déplacement et déterminer si l'événement d'avertissement est satisfait, et si l'événement d'avertissement est satisfait, envoyer un message d'avertissement au dispositif portable intelligent par l'intermédiaire de la seconde connexion Blue Tooth.

14. Dispositif selon la revendication 13, dans lequel le module d'avertissement (135) comprend :
un premier sous-module d'acquisition (141) configuré pour acquérir un élément à surveiller prédéfini et un événement d'avertissement prédéfini, envoyer l'élément à surveiller et l'événement d'avertissement au véhicule auto-équilibré, de sorte que le véhicule auto-équilibré surveille l'élément à surveiller dans ses données d'état de déplacement ;
un premier sous-module de réception (142) configuré pour recevoir un message d'avertissement qui est retourné par le véhicule auto-équilibré par l'intermédiaire de la première connexion Blue Tooth lorsque le véhicule auto-équilibré surveille que l'événement d'avertissement est satisfait ; et
un premier sous-module d'envoi (143) configuré pour envoyer le message d'avertissement qui est retourné par le véhicule auto-équilibré au dispositif portable intelligent par l'intermédiaire de la seconde connexion Blue Tooth, de sorte que le dispositif portable intelligent effectue un avertissement.

15. Dispositif selon la revendication 13, dans lequel le module d'avertissement (135) comprend :
un second sous-module d'acquisition (151) configuré pour acquérir un élément à surveiller prédéfini et un événement d'avertissement prédéfini, et envoyer l'élément à surveiller au véhicule auto-équilibré ;
un second sous-module de réception (152) configuré pour recevoir des données d'état en temps réel correspondant à l'élément à surveiller prédéfini qui est envoyé par le véhicule auto-équilibré ; et
un sous-module de surveillance (153) configuré pour surveiller les données d'état en temps réel et déterminer si l'événement d'avertissement est satisfait ; et
un second sous-module d'envoi (154) configuré pour, lorsque l'événement d'avertissement est satisfait, envoyer un message d'avertissement au dispositif portable intelligent par l'intermédiaire de la seconde connexion Blue Tooth de sorte que le dispositif portable intelligent effectue un avertissement.
